(19) Europäisches Patentamt
European Patent Office
Office européen des brevets

(11) **EP 4 679 911 A1**

(12) **EUROPEAN PATENT APPLICATION**
published in accordance with Art. 153(4) EPC

(43) Date of publication:
**14.01.2026 Bulletin 2026/03**

(51) International Patent Classification (IPC):
***H04W 72/0446*** *(2023.01)*

(21) Application number: **23936952.3**

(52) Cooperative Patent Classification (CPC):
**H04W 72/0446**

(22) Date of filing: **15.05.2023**

(86) International application number:
**PCT/CN2023/094361**

(87) International publication number:
**WO 2024/234265 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• LIU, Zhe
  **Dongguan, Guangdong 523860 (CN)**
• CAO, Jianfei
  **Dongguan, Guangdong 523860 (CN)**

(74) Representative: **Mewburn Ellis LLP
Aurora Building
Counterslip
Bristol BS1 6BX (GB)**

(54) **INFORMATION TRANSMISSION METHOD AND APPARATUS, AND TERMINAL DEVICE AND NETWORK DEVICE**

(57)    Provided in the embodiments of the present application are an information transmission method and apparatus, and a terminal device and a network device. The method comprises: a terminal device determining that time-domain resources of a plurality of PUCCHs partially or completely overlap with time-domain resources of one or more PUSCHs, the terminal device multiplexing UCI, which is carried by the plurality of PUCCHs, onto the one or more PUSCHs for transmission, or the terminal device sending the plurality of PUCCHs, and determining to not transmit a PUSCH among the one or more PUSCHs, which PUSCH has time-domain resources overlapping with those of the plurality of PUCCHs, wherein the plurality of PUCCHs are transmitted on the basis of the same or different spatial information; and a plurality of PUSCHs among the one or more PUSCHs are transmitted on the basis of different spatial information, or a plurality of transmission layer sets of any PUSCH among the one or more PUSCHs are transmitted on the basis of different spatial information.

Determining, by a terminal device, that time domain resources of a plurality of PUCCHs partially or completely overlap with time domain resources of one or more PUSCHs; and multiplexing, by the terminal device, UCI carried by the plurality of PUCCHs onto the one or more PUSCHs for transmission, or transmitting, by the terminal device, the plurality of PUCCHs and determining, by the terminal device, not to transmit a PUSCH among the one or more PUSCHs that has a time domain resource overlapping with the time domain resources of the plurality of PUCCHs — S410

FIG. 4

**Description**

## TECHNICAL FIELD

Embodiments of the present application relate to the field of mobile communication technology, and in particular, to information transmission methods and apparatuses, a terminal device, and a network device.

## BACKGROUND

With the development of communication technology, a terminal device may support simultaneous transmission of multi-uplink information to multiple transmission/reception points (TRPs) on a plurality of antenna panels to improve uplink spectrum utilization. However, in a case where time domain resources of multi-uplink information transmitted by a terminal device to multiple TRPs through a plurality of panels overlap, there is currently no specific method for the terminal device to transmit the uplink information.

## SUMMARY

The present application provides information transmission methods and apparatuses, a terminal device, and a network device.

In a first aspect, an information transmission method is provided, and the method includes:

determining, by a terminal device, that time domain resources of a plurality of physical uplink control channels (PUCCHs) partially or completely overlap with time domain resources of one or more physical uplink shared channels (PUSCHs); and multiplexing, by the terminal device, uplink control information (UCI) carried by the plurality of PUCCHs onto the one or more PUSCHs for transmission, or transmitting, by the terminal device, the plurality of PUCCHs and determining, by the terminal device, not to transmit a PUSCH among the one or more PUSCHs that has a time domain resource overlapping with the time domain resources of the plurality of PUCCHs;
where the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

In a second aspect, an information transmission method is provided, and the method includes:

determining, by a terminal device, third indication information, where the third indication information is used for indicating transmission information of a first channel; the transmission information includes one or more of spatial information associated with the first channel, precoding indication information, transmission layer number information, or sounding reference signal (SRS) resource indication information; and
transmitting, by the terminal device, the first channel based on the transmission information.

In a third aspect, an information transmission method is provided, and the method includes:

in a case where time domain resources of a plurality of physical uplink control channels (PUCCHs) of a terminal device partially or completely overlap with time domain resources of one or more physical uplink shared channels (PUSCHs), expecting, by a network device, uplink control information (UCI) carried by the plurality of PUCCHs to be multiplexed onto the one or more PUSCHs for transmission, or expecting, by the network device, to receive the plurality of PUCCHs, and expecting, by the network device, not to receive a PUSCH among the one or more PUSCHs that has a time domain resource overlapping with the time domain resources of the plurality of PUCCHs;
where the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

In a fourth aspect, an information transmission method is provided, and the method includes:
receiving, by a network device, a first channel, where the first channel is transmitted based on transmission information, the transmission information includes one or more of spatial information associated with the first channel, precoding indication information, transmission layer number information, or SRS resource indication information; and the transmission information is indicated based on third indication information.

In a fifth aspect, an information transmission apparatus is provided, and the apparatus is applied to a terminal device and includes:

a transmitting unit, configured to determine that time domain resources of a plurality of physical uplink control channels (PUCCHs) partially or completely overlap with time domain resources of one or more physical uplink shared channels (PUSCHs), multiplex uplink control information (UCI) carried by the plurality of PUCCHs onto the one or more PUSCHs for transmission, or transmit the plurality of PUCCHs and determine not to transmit a PUSCH among the one or more PUSCHs that has a time domain resource overlapping with the time domain resources of the plurality of PUCCHs;

where the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

In a sixth aspect, an information transmission apparatus is provided, and the apparatus is applied to a terminal device and includes:

a determining unit, configured to determine third indication information, where the third indication information is used for indicating transmission information of a first channel; the transmission information includes one or more of spatial information associated with the first channel, precoding indication information, transmission layer number information, or SRS resource indication information; and
a transmitting unit, configured to transmit the first channel based on the transmission information.

In a seventh aspect, an information transmission apparatus is provided, and the apparatus is applied to a network device and includes:

a receiving unit, configured to, in a case where time domain resources of a plurality of physical uplink control channels (PUCCHs) of a terminal device partially or completely overlap with time domain resources of one or more physical uplink shared channels (PUSCHs), expect uplink control information (UCI) carried by the plurality of PUCCHs to be multiplexed onto the one or more PUSCHs for transmission, or expect to receive the plurality of PUCCHs and expect not to receive a PUSCH among the one or more PUSCHs that has a time domain resource overlapping with the time domain resources of the plurality of PUCCHs;

where the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

In an eighth aspect, an information transmission apparatus is provided, and the apparatus is applied to a network device and includes:
a receiving unit, configured to receive a first channel, where the first channel is transmitted based on transmission information, the transmission information includes one or more of spatial information associated with the first channel, precoding indication information, transmission layer number information, or SRS resource indication information; and the transmission information is indicated based on third indication information.

A terminal device is provided in the present application, and the terminal device includes a processor and a memory. The memory is configured to store a computer program, and the processor is configured to call and run the computer program stored in the memory to perform the information transmission method in the first aspect or the second aspect.

A network device is provided in the present application, and the network includes a processor and a memory. The memory is configured to store a computer program, and the processor is configured to call and run the computer program stored in the memory to perform the information transmission method in the third aspect or the fourth aspect.

An information transmission method is provided in the present application. A terminal device may transmit PUCCHs and PUSCHs to multiple TRPs using a plurality of panels. In a case where time domain resources of the PUCCHs and the PUSCHs transmitted to the multiple TRPs partially overlap or completely overlap, the terminal device may multiplex UCI carried by the PUCCHs onto the PUSCHs for transmission to ensure complete transmission of uplink information. The terminal device may also transmit the PUCCHs and determine not to transmit the PUSCH that has a time domain resource overlapping with the time domain resources of the PUCCHs to ensure normal communication.

## BRIEF DESCRIPTION OF THE DRAWINGS

The drawings described herein are used to provide further understanding of the present application and constitute a part of the present application. The illustrative embodiments of the present application and their descriptions are used to explain the present application and do not constitute improper limitations on the present application. In the drawings:

FIG. 1 is a schematic diagram of an application scenario in the embodiments of the present application;

FIGS. 2A to 2D are timing diagrams of overlapping time domain resources of multi-uplink information provided by the embodiment of the present application;

FIG. 3 is a schematic diagram of a multi-panel/transmission/reception point (TRP) transmission scenario provided by the embodiments of the present application;

FIG. 4 is a first flowchart of an information transmission method provided by the embodiments of the present application;

FIG. 5 is a first schematic diagram of an information transmission scenario provided by the embodiments of the present application;

FIG. 6 is a second schematic diagram of an information transmission scenario provided by the embodiments of the present application;

FIG. 7 is a third schematic diagram of an information transmission scenario provided by the embodiments of the present application;

FIG. 8 is a fourth schematic diagram of an information transmission scenario provided by the embodiments of the present application;

FIGS. 9A and 9B are fifth schematic diagrams of an information transmission scenario provided by the embodiments of the present application;

FIGS. 10A and 10B are sixth schematic diagrams of an information transmission scenario provided by the embodiments of the present application;

FIG. 11 is a seventh schematic diagram of an information transmission scenario provided by the embodiments of the present application;

FIG. 12 is an eighth schematic diagram of an information transmission scenario provided by the embodiments of the present application;

FIG. 13 is a ninth schematic diagram of an information transmission scenario provided by the embodiments of the present application;

FIG. 14 is a tenth schematic diagram of an information transmission scenario provided by the embodiments of the present application;

FIG. 15 is a second flowchart of an information transmission method provided by the embodiments of the present application;

FIG. 16 is a first structural diagram of an information transmission apparatus provided by the embodiments of the present application;

FIG. 17 is a second structural diagram of an information transmission apparatus provided by the embodiments of the present application;

FIG. 18 is a schematic structural diagram of a communication device provided by the embodiments of the present application;

FIG. 19 is a schematic structural diagram of a chip provided by the embodiments of the present application; and

FIG. 20 is a schematic block diagram of a communication system provided by the embodiments of the present application.

## DETAILED DESCRIPTION

Technical solutions in embodiments of the present application will be described below with reference to the accompanying drawings of the embodiments of the present application. Obviously, the described embodiments are some but not all of the embodiments of the present application. All other embodiments obtained based on the embodiments of the present application by those ordinary skilled in the art without devoting creative efforts shall be included in the protection scope of the present application.

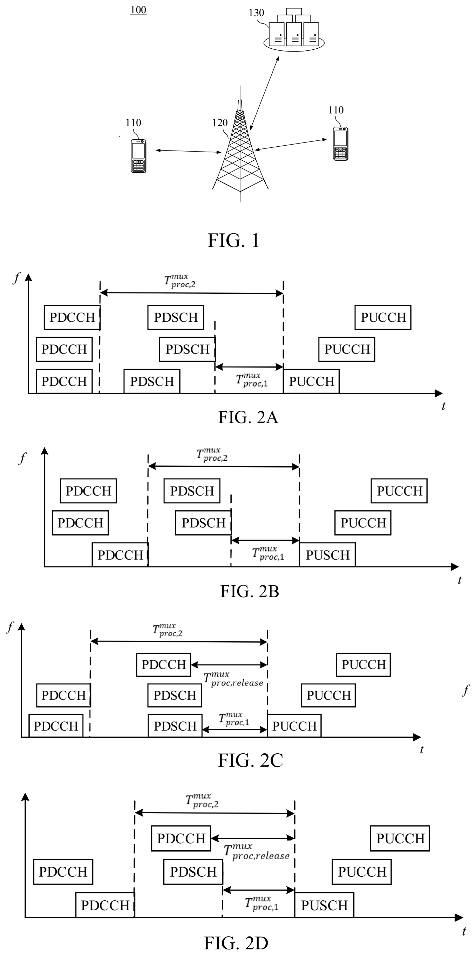

FIG. 1 is a schematic diagram of an application scenario in the embodiments of the present application.

As shown in FIG. 1, a communication system 100 may include terminal devices 110 and a network device 120. The network device 120 may communicate with the terminal device 110 through an air interface. Multi-service transmission is supported between the terminal device 110 and the network device 120.

It should be understood that the embodiments of the present application are described only by an example of the communication system 100, but the embodiments of the present application are not limited thereto. That is, technical solutions in the embodiments of the present application may be applied to various communication systems, such as: a long term evolution (LTE) system, a LTE time division duplex (TDD) system, a universal mobile telecommunication system (UMTS), an Internet of things (IoT) system, a narrow band Internet of things (NB-IoT) system, an enhanced Machine-type communication (eMTC) system, a 5G communication system (also known as a new radio (NR) communication system), or future communication systems.

In the communication system 100 shown in FIG. 1, the network device 120 may be an access network device that communicates with the terminal device 110. The access network device may provide communication coverage for a specific geographical area, and may communicate with the terminal device 110 (e.g., UE) located in the coverage area.

The network device 120 may be an evolutional base station (evolutional Node B, eNB or eNodeB) in a long term evolution (LTE) system, a next generation radio access network (NG RAN) device, a base station (gNB) in an NR system, or a wireless controller in a cloud radio access network (CRAN), or the network device 120 may be a relay station, an access point, a vehicle-mounted device, a wearable device, a hub, a switch, a bridge, a router, or a network device in a future evolution public land mobile network (PLMN).

The terminal device 110 may be any terminal device, which includes but is not limited to a terminal device connected to the network device 120 or other terminal devices by wire or wireless connection.

For example, the terminal device 110 may refer to an access terminal, a user equipment (UE), a user unit, a user station, a mobile station, a mobile console, a remote station, a remote terminal, a mobile device, a user terminal, a terminal, a wireless communication device, a user agent or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication function, a computing device or other processing devices connected to a wireless modem, a vehicle-mounted device, a wearable device, a terminal device in a 5G network, or a terminal device in a future evolution network, or the like.

The terminal device 110 may be used for device to device (D2D) communication.

The wireless communication system 100 may further include a core network device 130 that communicates with the network device 120. The core network device 130 may be a 5G core network (5G Core, 5GC) device, such as an access and mobility management function (AMF), an authentication server function (AUSF), a user plane function (UPF), or a session management function (SMF). Optionally, the core network device 130 may also be an evolved packet core (EPC) device of the LTE network, for example, a session management function and packet data network gateway-control (a session management function plus core packet gateway, SMF+PGW-C) device. It should be understood that SMF+PGW-C may simultaneously implement the functions that can be implemented by the SMF and the PGW-C. During the network evolution process, the above core network device may also be called other names, or the above core network device may form new network entities by dividing the functions of the core network, which is not limited in the embodiments of the present application.

The various functional units in the communication system 100 may also establish connections through next generation (NG) network interfaces to implement communication.

For example, the terminal device establishes an air interface connection with an access network device through an NR interface for transmitting user plane data and control plane signaling; the terminal device may establish a control plane signaling connection with the AMF through an NG interface 1 (N1 for short); the access network device, such as the next generation wireless access base station (gNB), may establish a user plane data connection with the UPF through an NG interface 3 (N3 for short); the access network device may establish a control plane signaling connection with the AMF through an NG interface 2 (N2 for short); the UPF may establish a control plane signaling connection with the SMF through an NG interface 4 (N4 for short); the UPF may interact user plane data with the data network through an NG interface 6 (N6 for short); the AMF may establish a control plane signaling connection with the SMF through an NG interface 11 (N11 for short); and the SMF may establish a control plane signaling connection with a policy control function (PCF) through an NG interface 7 (N7 for short).

FIG. 1 exemplarily shows a network device, a core network device and two terminal devices. Optionally, the wireless communication system 100 may include a plurality of network devices, and there may be another number of terminal devices within a coverage of each network device, which is not limited in the embodiments of the present application.

It should be noted that FIG. 1 is only an example of a system to which the present application is applicable. Certainly, the method shown in the embodiments of the present application may also be applied to other systems. Furthermore, terms "system" and "network" are often used interchangeably herein. Herein, the term "and/or" is only an association relationship for describing associated objects, which means that there may be three relationships. For example, A and/or B may represent three cases that: A exists alone, both A and B exist, and B exists alone. In addition, a character "/" herein generally means that related objects before and after "/" are in an "or" relationship. It should also be understood that the term "indication" mentioned in the embodiments of the present application may mean a direct indication, an indirect indication, or an association relationship. For example, A indicating B may mean that A directly indicates B (e.g., B may be obtained by A), or may mean that A indirectly indicates B (e.g., A indicates C, and B may be obtained by C), or may mean that there is an association relationship between A and B. It should also be understood that the term "corresponding" mentioned in the embodiments of the present application may mean that there is a direct correspondence or indirect correspondence between two, or an association relationship between the two, or a relationship of indicating and being indicated or a relationship of configuring and being configured, or the like. It should also be understood that the term "predefined" or "predefined rule" mentioned in the embodiments of the present application may be implemented by pre-saving corresponding codes, tables or other manners that may be used for indicating relevant information in a device (e.g., including the terminal device and the network device), and the present application does not limit its specific implementation. For example, predefinition may refer to definition in a protocol. It should also be understood that in the embodiments of the present application, the "protocol" may refer to a standard protocol in the field of communications, which may include, for example, an LTE protocol, an NR protocol, and related protocols applied in a future communication system, which is not limited in the present application.

To facilitate the understanding of the technical solutions in the embodiments of the present application, the related technologies of the embodiments of the present application will be described below. The following related technologies, as optional solutions, may be arbitrarily combined with the technical solutions in the embodiments of the present application, which all fall within the protection scope of the embodiments of the present application.

1. Processing of a plurality of PUCCHs with overlapping time domain resources, and a PUSCH and a PUCCH with overlapping time domain resources.

In NR standard version 15 (Release 15, R15), a terminal device can only transmit two PUCCHs at most in a time division manner in a time slot, and at least one of the PUCCHs is a short format PUCCH. In a case where the plurality of PUCCHs overlap in the time domain, a timing relationship is set to allow the terminal device to have enough time to determine whether different PUCCHs need to be multiplexed, and if multiplexing is required, consider the time required for UCI repackaging. In order to reduce interference between uplink transmissions of terminal devices in NR, in a case where a PUCCH and a PUSCH overlap in the time domain, UCI carried by the PUCCH is supported to be carried on PUSCH for transmission.

In a case where a plurality of PUCCHs overlap in the time domain, or a plurality of PUCCHs and PUSCHs overlap in the time domain, the PUCCH carries hybrid automatic repeat request-acknowledgment (HARQ-ACK) feedback for a physical downlink shared channel (PDSCH). The timing is specified as follows.

Condition 1, a first symbol of the earliest transmitted PUCCH/PUSCH in uplink transmissions overlapping in the time domain shall not be earlier than the processing time $T_{proc,1}^{mux}$ after the last symbol of the PDSCH corresponding to a group of PUCCHs (carrying HARQ-ACK) that overlap in the time domain.

Here, $T_{proc,1}^{mux} = \max\left\{T_{proc,1}^{mux,1}, \cdots, T_{proc,1}^{mux,i}, \cdots\right\}$, where $T_{proc,1}^{mux,i}$ is the i-th processing time. Moreover, $T_{proc,1}^{mux,i} = \left(N_1 + d_{1,1} + 1\right) \cdot (2048 + 144) \cdot \kappa \cdot 2^{-\mu} \cdot T_C$. $N_1$ is the PDSCH processing capability of the terminal device corresponding to the i-th PDSCH. $\mu$ is a configuration of subcarrier spacing (SCS), where a value of $\mu$ is a minimum value of the following configured SCSs: an SCS of the i-th PDSCH, an SCS of the PDCCH scheduled by the i-th PDSCH, an SCS of the PUCCH carrying the HARQ-ACK feedback of the i-th PDSCH, and SCSs of all PUSCHs overlapping in the time domain. $d_{1,1}$ is a predefined parameter value in the protocol.

Condition 2, a first symbol of the earliest transmitted PUCCH/PUSCH in uplink transmissions overlapping in the time domain shall not be earlier than the processing time $T_{proc,release}^{mux}$ after the last symbol of the PDCCH used for the semi-persistent scheduling (SPS) PDSCH release, and the HARQ-ACK feedback corresponding to the PDCCH is carried on one of a group of PUCCHs overlapping in the time domain.

Here, $T_{proc,release}^{mux} = \left\{T_{proc,release}^{mux,1}, \cdots, T_{proc,release}^{mux,i}, \cdots\right\}$, where $T_{proc,release}^{mux,i}$ is the i-th processing time. $T_{proc,release}^{mux,i} = (N + 1) \cdot (2048 + 144) \cdot \kappa \cdot 2^{-\mu} \cdot T_C$. N is the processing time of the terminal device corresponding to the i-th PDCCH for SPS PDSCH release. $\mu$ is a configuration of subcarrier spacing (SCS), where a value of $\mu$ is a minimum value of the following configured SCSs: an SCS of the i-th PDCCH used for SPS PDSCH release, an SCS of the PDCCH scheduled by the i-th PDSCH, an SCS of the PUCCH carrying the HARQ-ACK feedback of the i-th SPS PDSCH release, and SCSs of all PUSCHs overlapping in the time domain.

Condition 3, a first symbol of a plurality of PUCCHs overlapping in the time domain shall not be earlier than the processing time $T_{proc,2}^{mux}$ after the last symbol of the scheduling PDCCH of the PDSCH corresponding to a group of PUCCHs (carrying HARQ-ACK) overlapping in the time domain, or shall not be earlier than the processing time $T_{proc,2}^{mux}$ after the last symbol of the PDCCH for SPS PDSCH release corresponding to a group of PUCCHs (carrying HARQ-ACK) overlapping in the time domain.

Here, $T_{proc,2}^{mux} = \max\left\{T_{proc,2}^{mux,1}, \cdots, T_{proc,2}^{mux,i}, \cdots\right\}$, where $T_{proc,2}^{mux,i}$ is the i-th processing time. Moreover,

$$T_{proc,2}^{mux,i} = (N_2 + 1) \cdot (2048 + 144) \cdot \kappa \cdot 2^{-\mu} \cdot T_C$$ . $N_2$ is the PUSCH processing capability of the terminal device configured for the PUCCH cell. $\mu$ is a configuration of SCS, where a value of $\mu$ is a minimum value of the following configured SCSs: an SCS of the PDCCH scheduling the i-th PDSCH, an SCS of the PDCCH used for SPS PDSCH release, and an SCS of the PUCCH cell.

For example, timing diagrams of overlapping time domain resources of multi-uplink information shown in FIG. 2A to FIG. 2D are referred to. The HARQ-ACK information carried by the PUCCH in FIG. 2A and FIG. 2B is feedback to the PDSCH, and the HARQ-ACK information carried by the PUCCH in FIG. 2C and FIG. 2D is feedback to the PDSCH and feedback to the SPS PDSCH release.

In actual applications, for scenarios where time domain resources of a plurality of PUCCHs overlap, on a basis of meeting the above timing relationship, the UCI of the plurality of PUCCHs with overlapping time domain resources are multiplexed onto one of the PUCCH resources for transmission, and the resource of the PUCCH is determined based on the load of the multiplexed UCI and the PUCCH resource indication field in the downlink control information (DCI).

For the scenario where the time domain resources of the PUCCH and the PUSCH overlap, on a basis of meeting the above timing relationship, the UCI carried by the PUCCH may be multiplexed onto the PUSCH for transmission. Here, a priority order of the UCI multiplexed onto the PUSCH transmission may meet the following conditions.

A. If a PUSCH with overlapping time domain resources includes non-periodic channel state information (CSI), the UCI is multiplexed onto the PUSCH.
B. The multiplexing priority of DCI-scheduled PUSCH is higher than that of the configured grant PUSCH.
C. The multiplexing priority of the PUSCH with a relatively small carrier index (CC index) is higher than that of the PUSCH with a relatively large carrier index.
D. If no suitable PUSCH is selected from the above three options, the UCI is multiplexed onto the PUSCH with the earliest start time.

2. Uplink multi-panel/TRP transmission.

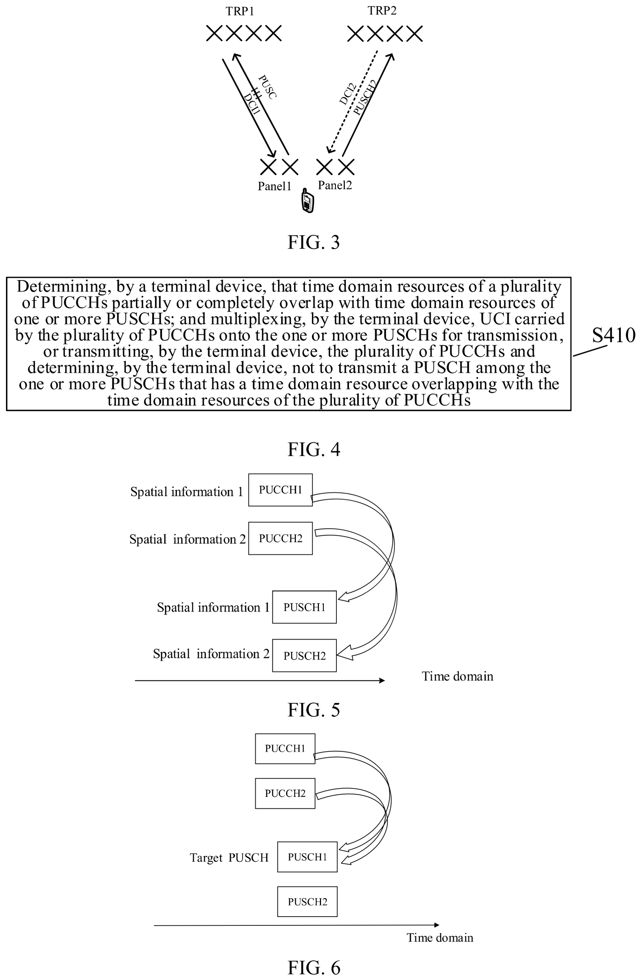

The uplink multi-panel/TRP transmission may refer to that the terminal device communicates with the network through a plurality of panels/TRPs. For example, as shown in FIG. 3, the terminal device may transmit PUSCH 1 to TRP1 through panel1 and transmit PUSCH 2 to TRP2 through panel2.

In actual applications, uplink transmission of a plurality of panels/TRPs may be scheduled via single downlink control information (DCI) or via a plurality of DCI. For example, referring to FIG. 2, the network may schedule PUSCH 1 via DCI1 and schedule PUSCH 2 via DCI2. The network may also schedule PUSCH 1 and PUSCH 2 simultaneously via DCI1.

The network device may inform the terminal device of the spatial related information of the uplink information via a unified transmission configuration indicator (TCI) state. Two unified TCI state modes are designed in the unified TCI state.

Mode 1: one type of TCI state is included. This type of TCI state may be applicable to uplink and downlink channels and signals; and this type of TCI state is usually called a joint TCI state.

Mode 2: two types of TCI states, which are a downlink TCI state (DL TCI state) and an uplink TCI state (UL TCI state) are included. The DL TCI state is only applicable to downlink channels and signals; and the UL TCI state is only applicable to uplink channels and signals.

It should be understood that uplink channels (e.g., physical uplink control channel (PUCCH), physical uplink shared channel (PUSCH)) and signals (e.g., channel sounding reference signal (SRS)) use UL TCI state or joint TCI state to indicate uplink transmission, for example, indicating a spatial domain filter corresponding to the uplink transmission.

Optionally, the unified TCI state may be dynamically updated and indicated using a media access control control element (MAC CE) and/or DCI.

In uplink multi-panel/TRP transmission, a PUCCH and/or a PUSCH may be transmitted to multiple TRPs, and the PUSCH and/or the PUCCH transmitted by the terminal device may be associated with different TCI states.

It should be noted that the time domain resources of the PUCCH and/or the PUSCH transmitted by the terminal device may not overlap, partially overlap, or completely overlap.

If the PUCCH and the PUSCH include transmissions to different TRPs by the UE, and the HARQ feedback mode is HARQ independent feedback for each TRP (ackNackFeedbackMode = separate), the terminal device does not expect the PUCCH or the PUSCH transmitted to one TRP to overlap in the time domain with the PUCCH or the PUSCH transmitted to another TRP.

In the related art, multiplexing rules of UCI are all for the same TRP. In a case where the time domain resources of multi-uplink information transmitted by a terminal device to multiple TRPs overlap, there is currently no specific method for the terminal device to transmit the uplink information.

To facilitate the understanding of the technical solutions in the embodiments of the present application, the technical solutions of the present application will be described in detail below through specific embodiments. The above related technologies, as optional solutions, may be arbitrarily combined with the technical solutions in the embodiments of the present application, which all fall within the protection scope of the embodiments of the present application. The embodiments of the present application include at least a part of the following contents.

FIG. 4 shows an information transmission method provided by the embodiments of the present application, and the method may include that:

S410, a terminal device determines that time domain resources of a plurality of physical uplink control channels (PUCCHs) partially or completely overlap with time domain resources of one or more physical uplink shared channels (PUSCHs); and multiplexing, by the terminal device, uplink control information (UCI) carried by the plurality of PUCCHs onto the one or more PUSCHs for transmission, or transmitting, by the terminal device, the plurality of PUCCHs and determining, by the terminal device, not to transmit a PUSCH among the one or more PUSCHs that has a time domain resource overlapping with the time domain resources of the plurality of PUCCHs;

where the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

Correspondingly, during the communication between the terminal device and a network device, the network device determines that the time domain resources of the plurality of PUCCHs of the terminal device partially overlap or completely overlap with the time domain resources of the one or more PUSCHs. In this case, the network device expects uplink control information (UCI) carried by the plurality of PUCCHs to be multiplexed onto the one or more PUSCHs for transmission, or the network device expects to receive the plurality of PUCCHs and not to receive a PUSCH among the one or more PUSCHs that has a time domain resource overlapping with the time domain resources of the plurality of PUCCHs.

It should be understood that the terminal device in the embodiments of the present application supports simultaneously transmitting multi-uplink information. The terminal device may transmit multi-uplink information to multiple TRPs on a plurality of panels, in other words, the terminal device may transmit multi-uplink information to multiple TRPs via a plurality of beams.

In the embodiments of the present application, the terminal device may simultaneously transmit a plurality of PUCCHs and one or more PUSCHs. For the plurality of PUCCHs, the plurality of PUCCHs may be transmitted based on the same or different spatial information. For the one or more PUSCHs, if the one or more PUSCHs include a plurality of PUSCHs, the plurality of PUSCHs may be transmitted based on different spatial information; and if each of the one or more PUSCHs includes a plurality of transmission layer sets, the plurality of transmission layer sets of the PUSCH may also be transmitted based on different spatial information.

It should be noted that spatial information may be used to indicate the spatial transmission characteristics of information, such as a transmission panel of the information, a transmission beam of the information, and a TRP corresponding to the information, which are not limited in the embodiments of the present application. It should be understood that different spatial information will result in different spatial transmission characteristics.

In an embodiment of the present application, the spatial information may include one or more of:
a TCI state; a control resource set (CORESET) group index value; a sounding reference signal (SRS) resource set index value; other reference signal resource set index values; a sounding reference signal index value; other reference signal index values; an antenna panel identifier; or a TRP index value.

It should be understood that the TCI state may indicate a spatial filter of channel transmission, in other words, the TCI state may indicate a beam of channel transmission. Transmission based on different TCI states may be understood as transmission based on different spatial filters/beams.

In some embodiments, the TCI state may be a joint TCI state or an uplink TCI state, which is not limited in the embodiments of the present application.

In some embodiments, the TCI state of each channel may be configured via a radio resource control (RRC) signaling, or dynamically updated and indicated using an MAC control element (MAC CE) and/or DCI, which is not limited in the embodiments of the present application.

It should be understood that a CORESET may be associated with a TRP or a TCI state. For example, the network device may configure a higher level indication (i.e., CORESET pool index) for each CORESET to indicate whether the CORESETs have the same TRP. The value has a range 0 and 1. For CORESETs configured with the same CORESET pool index, the terminal device may consider that this is data from the same TRP. The terminal device may indicate the spatial transmission characteristics of the channel using the CORESET index value associated with the PUCCH or the PUSCH.

In addition, the SRS is a reference signal transmitted by the terminal device in the uplink direction. The terminal device may be configured with a plurality of SRS ports to associate different panels in the terminal device. For example, the network device may configure an SRS associated with the PUCCH or the PUSCH. In this way, the terminal device may indicate the PUCCH or the PUSCH to be associated panel based on the SRS index value or SRS resource set index value associated with the PUCCH or the PUSCH, thereby indicating the spatial transmission characteristics of the channel using the SRS index value or the SRS resource set index value.

In the embodiments of the present application, other reference signals may include one or more of:
a channel state information reference signal (CSI-RS), a demodulation reference signal (DMRS), or a synchronization reference signal block (SSB).

It should be understood that other reference signals may refer to reference signals transmitted by the network device in the downlink direction. Each of the above reference signals may be configured with multiple ones and transmitted repeatedly within a certain period for beam management. That is, different reference signal resource set index values and different reference signal index values in the above other reference signals may be associated with different spatial filters/beams. In this way, the terminal device may indicate the PUCCH or the PUSCH to be associated spatial filter/beam based on other reference signal index values or other reference signal resource set index values associated with the PUCCH or the PUSCH, thereby indicating the spatial transmission characteristics of the channel using other reference signal index values or other reference signal resource set index values.

The time domain resources of the plurality of PUCCHs mentioned in the embodiments of the present application partially overlap or completely overlap with the time domain resources of the one or more PUSCHs, which may be understood as the time domain resources of the plurality of PUCCHs overlapping with the time domain resources of the one or more PUSCHs in pairs (the time domain resources overlap includes partial time domain resources overlap or completely time domain resources overlap).

In some embodiments, the terminal device determines that the time domain resources of the plurality of PUCCHs partially overlap or completely overlap with the time domain resources of the one or more PUSCHs, which may include that:
the terminal device determines that first time domain resources and second time domain resources partially overlap or completely overlap, or that the first time domain resources and the second time domain resources overlap in a same time domain resource unit.

The first time domain resources refer to time domain resources occupied by the plurality of PUCCHs. The second time domain resources refer to time domain resources occupied by the one or more PUSCHs.

Optionally, a unit of the time domain resource may be a slot, a symbol, a subframe, a mini slot, a slot aggregation, a symbol aggregation, or the like.

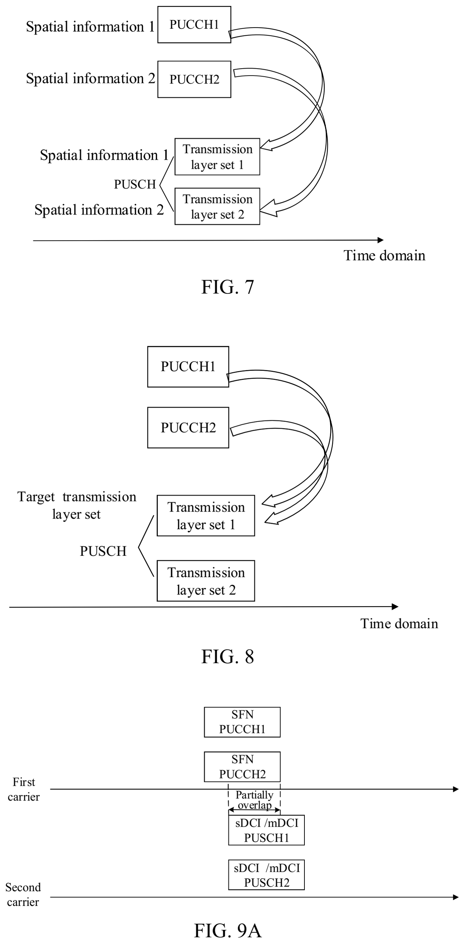

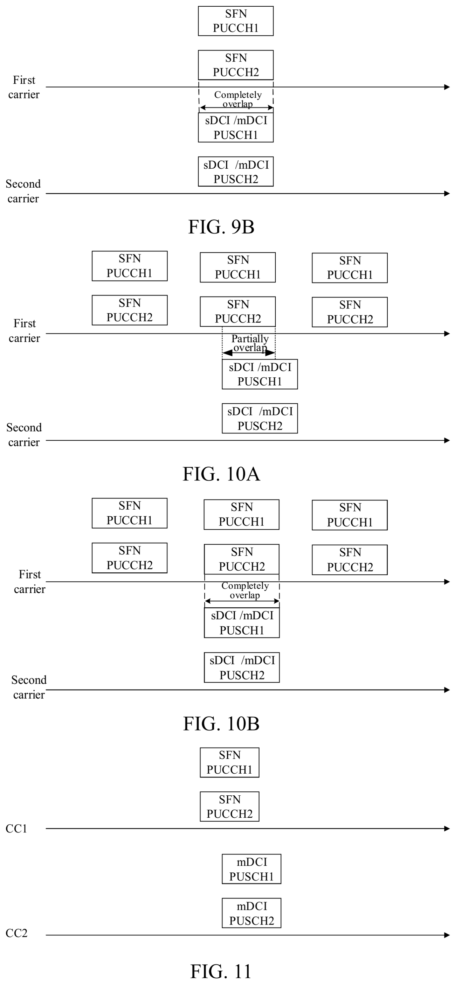

The first time domain resources and the second time domain resources partially overlap, which may refer to FIG. 9A or FIG. 10A. The first time domain resources and the second time domain resources completely overlap, which may refer to FIG. 9B or FIG. 10B.

It may be understood that in the embodiments of the present application, in a case where the time domain resources of the PUCCH and the PUSCH transmitted based on different spatial information partially or completely overlap, the terminal device may transmit a plurality of PUCCHs and ignore the PUSCH overlapping with the time domain resources of the PUCCHs. In addition, the terminal device may also multiplex the UCI carried by the plurality of PUCCHs onto the one or more PUSCHs for transmission. The UCI carried by the plurality of PUCCHs is multiplexed onto the one or more PUSCHs for transmission, which may be understood as that the terminal device does not transmit the plurality of PUCCHs, and carries the UCI carried in the plurality of PUCCHs through the one or more PUSCHs. In other words, the terminal device does not transmit the plurality of PUCCHs, but carries the UCI carried by the plurality of PUCCHs that are not transmitted on the one or more PUSCHs for transmission.

Correspondingly, during the communication between the terminal device and the network device, in a case where the time domain resources of the PUCCHs and the PUSCHs transmitted by the terminal device based on different spatial information partially overlap or completely overlap, the network device may determine that the PUSCH transmitted by the terminal device may carry UCI carried by the plurality of PUCCHs that have time domains overlapping with the time domain of the PUSCH, or the network device may determine that the terminal device has only transmitted the PUCCH, but has not transmitted the PUSCH that has a time domain overlapping with the time domains of the PUCCHs.

In some embodiments, the UCI carried by each PUCCH in the plurality of PUCCHs may include at least one of:
hybrid automatic repeat request (HARQ) feedback information, CSI, or scheduling request (SR).

It may be seen that in the information transmission method provided by the embodiments of the present application, the terminal device may transmit the PUCCH and the PUSCH to multiple TRPs using a plurality of panels. In a case where the time domain resources of the PUCCHs and the PUSCHs transmitted simultaneously to the multiple TRPs overlap, the terminal device may multiplex the UCI carried by the PUCCHs onto the PUSCHs for transmission to ensure complete transmission of uplink information. The terminal device may also only transmit the PUCCHs and not transmit the PUSCH that has a time domain resource overlapping with the time domain resources of the PUCCHs to ensure normal communication.

In an embodiment of the present application, the terminal device multiplexes UCI carried by the plurality of PUCCHs onto the one or more PUSCHs for transmission, or the terminal device transmits a plurality of PUCCHs, and determines not to transmit a PUSCH among the one or more PUSCHs that has a time domain resource overlapping with the time domain resources of the plurality of PUCCHs, which may be implemented in the following manner.

The terminal device determines, based on protocol specifications, to multiplex the UCI carried by the plurality of PUCCHs onto the one or more PUSCHs for transmission, or determines to transmit the plurality of PUCCHs and not to transmit the PUSCH among the one or more PUSCHs that has a time domain resource overlapping with the time domain resources of the plurality of PUCCHs. Alternatively, the terminal device determines, based on a channel priority, to multiplex the UCI carried by the plurality of PUCCHs onto the one or more PUSCHs for transmission, or determines to transmit the plurality of PUCCHs and not to transmit the PUSCH among the one or more PUSCHs that has a time domain resource overlapping with the time domain resources of the plurality of PUCCHs.

It should be understood that in a case where the time domain resources of the plurality of PUCCHs partially or completely overlap with the time domain resources of the one or more PUSCHs, the operation of the terminal device may be as specified by the protocol. That is, whether the terminal device multiplexes the UCI carried by the plurality of PUCCHs onto one or more PUSCHs for transmission, or the terminal device transmits the plurality of PUCCHs and determines not to transmit the PUSCH among the one or more PUSCHs that has a time domain resource overlapping with the time domain resources of the plurality of PUCCHs, may be specified by the protocol. The terminal device may perform operations as specified in the protocol.

In some embodiments, the terminal device determines that the time domain resources of the plurality of PUCCHs partially or completely overlap with the time domain resources of the one or more PUSCHs. In this case, the terminal device may directly multiplex the UCI carried by the plurality of PUCCHs onto the one or more PUSCHs for transmission to ensure complete transmission of uplink information.

In some other embodiments, the terminal device determines that the time domain resources of the plurality of PUCCHs partially or completely overlap with the time domain resources of the one or more PUSCHs. In this case, the terminal device may transmit the plurality of PUCCHs and not transmit the PUSCH among the one or more PUSCHs that has a time domain resource overlapping with the time domain resources of the plurality of PUCCHs. This implementation is simple and efficient, and may ensure normal uplink communication, but will lose PUSCH information.

It should be noted that the terminal device may also determine, based on configuration/indication of the network device, whether to multiplex the UCI carried by the plurality of PUCCHs onto the one or more PUSCHs for transmission, or to transmit the plurality of PUCCHs and not to transmit the PUSCH among the one or more PUSCHs that has a time domain resource overlapping with the time domain resources of the plurality of PUCCHs.

In some other embodiments, the terminal device determines that the time domain resources of the plurality of PUCCHs partially or completely overlap with the time domain resources of the one or more PUSCHs. In this case, the terminal device may determine whether to use a multiplexing manner for uplink transmission or not based on the channel priority.

In an embodiment of the present application, the terminal device determines, based on the channel priority, to multiplex the UCI carried by the plurality of PUCCHs onto the one or more PUSCHs for transmission, or determines to transmit the plurality of PUCCHs and not to transmit the PUSCH among the one or more PUSCHs that has a time domain resource overlapping with the time domain resources of the plurality of PUCCHs, which may be implemented in the following ways.

In a case where a channel priority of the plurality of PUCCHs is higher than a channel priority of the one or more PUSCHs, the terminal device adopts a non-multiplexing manner for uplink transmission, that is, the terminal device transmits the plurality of PUCCHs and does not transmit the PUSCH among the one or more PUSCHs that has a time domain resource overlapping with the time domain resources of the plurality of PUCCH; and in a case where the channel priority of the plurality of PUCCHs is lower than or equal to the channel priority of the one or more PUSCHs, the terminal device adopts a multiplexing manner for uplink transmission, that is, the terminal device multiplexes the UCI carried by the plurality of PUCCHs onto the one or more PUSCHs for transmission.

In actual applications, the terminal device may determine a priority order of different channels based on the channel priority index values. The channel priority index value may be configured by the network device, or determined by the terminal device based on a preset rule, or predefined by the protocol, which is not limited in the embodiments of the present application.

It should be noted that the channel priority of the plurality of PUCCHs is higher than the channel priority of the one or more PUSCHs, which may mean that the channel priorities of the plurality of PUCCHs are all higher than the channel priorities of a first PUSCH or a plurality of PUSCHs, in other words, a channel priority of a PUCCH with the lowest channel priority among the plurality of PUCCHs is higher than a channel priority of a PUSCH with the highest channel priority among the one or more PUSCHs, in other words, a channel priority of any one of the plurality of PUCCHs is higher than a channel priority of any one of the one or more PUSCHs.

Similarly, the channel priority of the plurality of PUCCHs is lower than or equal to the channel priority of the one or more PUSCHs, which may mean that the channel priorities of the plurality of PUCCHs are all lower than or equal to the channel priorities of the first PUSCH or the plurality of PUSCHs, in other words, a channel priority of a PUCCH with the highest channel priority among the plurality of PUCCHs is lower than or equal to a channel priority of a PUSCH with the lowest channel priority among the one or more PUSCHs, in other words, a channel priority of any one of the plurality of PUCCHs is lower than or equal to a channel priority of any one of the one or more PUSCHs.

It should be understood that the terminal device determines operations for the PUCCHs and the PUSCHs with overlapping time domain resources based on the channel priority, which may ensure that a high-priority channel is transmitted first, thereby ensuring an integrity of uplink information transmission to a certain extent.

The following describes a possible implementation of multiplexing the UCI carried by the plurality of PUCCHs onto the one or more PUSCHs for transmission in the embodiments of the present application.

In a possible implementation (referred to as the first manner), the one or more PUSCHs mentioned in the embodiments of the present application may be a plurality of PUSCHs, where the plurality of PUSCHs may be transmitted simultaneously based on different spatial information. For example, the plurality of PUSCHs may be transmitted simultaneously to multiple TRPs based on a plurality of panels/beams.

It should be noted that the plurality of PUSCHs here may include a PUSCH scheduled by one or more DCI and/or a configured grant PUSCH. It may be understood that the plurality of PUSCHs may include a PUSCH scheduled by DCI and/or a configured grant PUSCH. The PUSCH scheduled by DCI may include a PUSCH scheduled by single DCI and/or a PUSCH scheduled by multi-DCI, which is not limited in the embodiments of the present application.

It should also be noted that in this implementation, the transmission manner of the plurality of PUSCHs may be a single frequency network (SNF) transmission manner, where each PUSCH carries the same content, and different PUCCHs are associated with different spatial information. The transmission manner of the plurality of PUSCHs may also be other transmission manners, such as the plurality of PUSCHs scheduled by multi-DCI for carrying different contents, which is not limited in the embodiments of the present application.

In addition, the time domain resources of the plurality of PUSCHs may partially overlap or completely overlap, which is not limited in the embodiments of the present application.

In the first manner, the terminal device multiplexes the uplink control information (UCI) carried by the plurality of PUCCHs onto the one or more PUSCHs for transmission, which may include any of:

multiplexing, by the terminal device, UCI carried by a first PUCCH among the plurality of PUCCHs onto a first PUSCH among the one or more PUSCHs for transmission;

multiplexing, by the terminal device, the UCI carried by the plurality of PUCCHs onto a target PUSCH among the one or more PUSCHs for transmission; or

in a case where an acknowledgment/ negative acknowledgement (ACK/NACK) feedback mode is joint feedback, multiplexing, by the terminal device, the UCI carried by the first PUCCH among the plurality of PUCCHs onto the first PUSCH among the one or more PUSCHs for transmission; and in a case where the ACK/NACK feedback mode is separate feedback, multiplexing, by the terminal device, the UCI carried by the plurality of PUCCHs onto the target PUSCH among the one or more PUSCHs for transmission;

where the first PUCCH is any one of the plurality of PUCCHs, and the first PUCCH and the first PUSCH are transmitted based on same spatial information.

In the embodiments of the present application, a certain PUCCH among the plurality of PUCCHs and a certain or some PUSCHs among the plurality of PUSCHs may have an association relationship. The association relationship may include a case where a certain PUCCH among the plurality of PUCCHs and a certain or some PUSCHs among the plurality of PUSCHs may be transmitted based on the same spatial information, or a certain PUCCH among the plurality of PUCCHs and a certain or some PUSCHs among the plurality of PUSCHs may have the same index value or identifier (the index value and the identifier may be configured by the network device). The association relationship is not limited in the embodiments of the present application.

In some embodiments, the terminal device may multiplex the UCI carried by any one of the plurality of PUCCHs onto a PUSCH associated with the PUCCH in the plurality of PUSCHs for transmission, in other words, the terminal device may carry the UCI carried by the PUCCH associated with the PUSCH via any one of the plurality of PUSCHs.

As an example, the terminal device may multiplex the UCI carried by any one of the plurality of PUCCHs onto a PUSCH transmitted based on the same spatial information as the PUCCH for transmission. Referring to FIG. 5, it is assumed that the plurality of PUCCHs include PUCCH 1 and PUCCH 2, and the plurality of PUSCHs include PUSCH 1 and PUSCH 2. The time domain resources of PUCCH 1, PUCCH 2, PUSCH 1 and PUSCH 2 partially overlap. PUCCH 1 is transmitted based on spatial information 1, and PUCCH 2 is transmitted based on spatial information 2. In this scenario, the terminal device may multiplex UCI carried by PUCCH 1 onto PUSCH 1 transmitted based on spatial information 1 in the plurality of PUSCHs for transmission, and multiplex UCI carried by PUCCH 2 onto PUSCH 2 transmitted based on spatial information 2 in the plurality of PUSCHs for transmission.

It should be understood that the terminal device multiplexing the UCI carried by the PUCCH based on the same spatial information may ensure the complete transmission of all uplink information.

In some other embodiments, the terminal device may multiplex the UCI carried by the plurality of PUCCHs onto a certain PUSCH among the plurality of PUSCHs for transmission. In the embodiments of the present application, the PUSCH is recorded as a target PUSCH. Referring to FIG. 6, it is assumed that the plurality of PUCCHs include PUCCH 1 and PUCCH 2, and the plurality of PUSCHs include PUSCH 1 and PUSCH 2. The time domain resources of PUCCH 1, PUCCH 2, PUSCH 1 and PUSCH 2 overlap. PUCCH 1 is transmitted based on spatial information 1, and PUCCH 2 is transmitted based on spatial information 2. In this scenario, the terminal device may multiplex both UCI carried by PUCCH 1 and UCI carried by PUCCH 2 onto PUSCH 1 among the plurality of PUSCHs for transmission, or onto PUSCH 2 among the plurality of PUSCHs for transmission.

In an embodiment of the present application, the target PUSCH may be any one of the following contents.

1) The target PUSCH is a PUSCH associated with a first TCI state among the plurality of PUSCHs. The first TCI state may be the 1st TCI state, the 2nd TCI state, ..., or the last TCI state among a plurality of TCI states configured by the network device. The first TCI state is not limited in the embodiments of the present application. It should be noted that the first TCI state may be a joint TCI state or an uplink TCI state, which is not limited in the embodiments of the present application.

2) The target PUSCH is a PUSCH with a first value of SRS resource set index values associated with the plurality of PUSCHs. The first value may be the minimum value among the SRS resource set index values, the maximum value among the SRS resource set index values, or any of other fixed values, which is not limited in the embodiments of the present application. It may be understood that the terminal device may multiplex the UCI carried by the plurality of PUCCHs onto a PUSCH associated with a fixed SRS resource set for transmission, and the implementation is simple and efficient.

3) The target PUSCH is a PUSCH with a second value of other reference signal resource set index values associated with the plurality of PUSCHs. Here, other reference signals may include one or more of CSI-RS, DMRS or SSB, which is not limited in the embodiments of the present application. In addition, the second value may be the minimum value among other reference signal resource set index values, or the maximum value among other resource set index values, or any of other fixed values, which is not limited in the embodiments of the present application. It may be understood that the terminal device may multiplex the UCI carried by the plurality of PUCCHs onto a PUSCH associated with a fixed one of other resource sets for transmission, and the implementation is simple and efficient.

4) The target PUSCH is a PUSCH with a first identifier of antenna panel identifiers associated with the plurality of PUSCHs. The first identifier may be an identifier of any one of the plurality of antenna panels configured by the terminal device, which is not limited in the embodiments of the present application. It may be understood that the terminal device may multiplex the UCI carried by the plurality of PUCCHs onto a PUSCH associated with a fixed antenna panel for transmission, and the implementation is simple and efficient.

5) The target PUSCH is a PUSCH with a third value of TRP index values associated with the plurality of PUSCHs. The third value may be the minimum value, the maximum value, or any other fixed value among the TRP index values, which is not limited in the embodiments of the present application. It may be understood that the terminal device may multiplex the UCI carried by the plurality of PUCCHs onto a PUSCH associated with a fixed TRP for transmission, and the implementation is simple and efficient.

6) The target PUSCH is a PUSCH with a fourth value of CORESET index values associated with the plurality of PUSCHs. The fourth value may be the maximum value, the minimum value, or any other fixed value among the CORESET index values, which is not limited in the embodiments of the present application. It may be understood that the terminal device may multiplex the UCI carried by the plurality of PUCCHs onto a PUSCH associated with a fixed CORESET for transmission, and the implementation is simple and efficient.

7) The target PUSCH is a PUSCH transmitted in a first order among the plurality of PUSCHs. The first order may be the first transmission order, the second transmission order, the last transmission order, or the like, which is not limited in the embodiments of the present application. It may be understood that the terminal device may multiplex the UCI carried by the plurality of PUCCHs onto a PUSCH in a certain transmission order for transmission. For example, the terminal device may multiplex the UCI carried by the plurality of PUCCHs onto the first transmitted PUSCH (or referred to as the earliest transmitted PUSCH) for transmission, so that the UCI may be transmitted as early as possible and the data transmission delay may be shortened.

8) The target PUSCH is a PUSCH scheduled in a second order among the plurality of PUSCHs. The second order may be the first scheduled order, the second scheduled order, the last scheduled order, or the like, which is not limited in the embodiments of the present application. For example, the terminal device may multiplex the UCI carried by the plurality of PUCCHs onto the first scheduled PUSCH (or referred to as the earliest scheduled PUSCH) for transmission, so that the UCI may be transmitted as early as possible and the data transmission delay may be shortened.

9) The target PUSCH is a PUSCH with a first level of modulation and coding scheme (MCS) levels among the plurality of PUSCHs. The first level may be any level in the MCS levels, such as the highest level, the second highest level, or the lowest level, which is not limited in the embodiments of the present application. For example, the terminal device may multiplex the UCI carried by the plurality of PUCCHs onto a PUSCH with the highest MCS level for transmission, so as to increase the reliability of UCI transmission.

10) The target PUSCH is each PUSCH among the plurality of PUSCHs. It may be understood that the terminal device may multiplex the UCI carried by the plurality of PUCCHs onto each PUSCH in the plurality of PUSCHs for transmission, so as to ensure that the uplink data is completely transmitted. It should be noted that, in a case where the plurality of PUCCHs carry the same UCI, for example, the plurality of PUCCHs are transmitted in an SNF transmission manner, the SFN transmission means that each PUCCH carries the same content (i.e., the UCI is the same), and different PUCCHs are associated with different spatial information. In this case, the terminal device may multiplex the UCI onto each PUSCH for transmission, that is, the UCI is carried in each PUSCH of the plurality of PUSCHs to ensure the complete transmission of the UCI. In addition, in a case where the plurality of PUCCHs carry different UCI, the terminal device may combine or concatenate the UCI carried by the plurality of PUCCHs, and multiplex the combined UCI onto all PUSCHs for transmission.

It should be understood that the terminal device multiplexes the UCI carried by the plurality of PUCCHs onto a target PUSCH among the plurality of PUSCHs for transmission, the implementation is simple and convenient, and the processing efficiency of the terminal device may be improved.

In still other embodiments, the terminal device may determine, based on the ACK/NACK feedback mode, whether to multiplex the UCI carried by any one of the plurality of PUCCHs onto a PUSCH associated with the PUCCH among the one or more PUSCHs for transmission, or to multiplex the UCI carried by the plurality of PUCCHs onto a target PUSCH among the one or more PUSCHs for transmission.

It should be noted that the ACK/NACK feedback mode may include joint feedback (ackNackFeedbackMode = joint) and separate feedback (ackNackFeedbackMode = separate). In a multi-TRP transmission scenario, the backhaul connection between the multiple TRPs may be ideal or non-ideal. Under an ideal backhaul connection, the TRPs may quickly and dynamically exchange information. Under a non-ideal backhaul connection, the TRPs may only quasi-statically exchange information due to large latency. Here, in a case where the backhaul connection between the multiple TRPs is ideal, the terminal device may perform HARQ feedback using a joint feedback mode; and in a case where the backhaul connection between the multiple TRPs is non-ideal, the terminal device may perform HARQ feedback using a separate feedback mode.

As an example, in a case where the ACK/NACK feedback mode is joint feedback, the terminal device may multiplex the UCI carried by any one of the plurality of PUCCHs onto a PUSCH associated with the PUCCH among the one or more PUSCHs for transmission; and in a case where the ACK/NACK feedback mode is separate feedback, the terminal device may multiplex the UCI carried by the plurality of PUCCHs onto a target PUSCH among the one or more PUSCHs for transmission. In this way, the complete transmission of uplink information may be guaranteed.

In another example, in a case where the ACK/NACK feedback mode is joint feedback, the terminal device may multiplex the UCI carried by the plurality of PUCCHs onto a target PUSCH among the one or more PUSCHs for transmission; and in a case where the ACK/NACK feedback mode is separate feedback, the terminal device may multiplex the UCI carried by any one of the plurality of PUCCHs onto a PUSCH associated with the PUCCH among the one or more PUSCHs for transmission.

In this way, the terminal device may select different UCI multiplexing manners for transmission depending on different feedback modes, thereby improving the implementation flexibility of the terminal device.

It should be noted that the terminal device may support multiplexing the UCI carried by any one of the plurality of PUCCHs onto the PUSCH associated with the PUCCH for transmission, and may also support multiplexing all the UCI carried by the plurality of PUCCHs onto the target PUSCH among the plurality of PUSCHs for transmission. The terminal device may also support both multiplexing the UCI carried by any one of the plurality of PUCCHs onto the PUSCH associated with the PUCCH for transmission, and multiplexing all the UCI carried by the plurality of PUCCHs onto the target PUSCH among the plurality of PUSCHs for transmission.

In a case where the terminal device supports both multiplexing the UCI carried by any one of the plurality of PUCCHs onto the PUSCH associated with the PUCCH for transmission, and multiplexing all the UCI carried by the plurality of PUCCHs onto the target PUSCH among the plurality of PUSCHs for transmission, the terminal device may select one of the manners for the above transmission based on the configuration/indication of the network device, or the terminal device determines which multiplexing manner is actually used for multiplexing transmission based on the ACK/NACK feedback mode, which is not limited in the embodiments of the present application.

In another possible implementation (referred to as the second manner), the one or more PUSCHs mentioned in the embodiments of the present application may be one PUSCH. The one PUSCH may include a plurality of transmission layer sets, where the plurality of transmission layer sets are transmitted based on different spatial information. For example, the plurality of transmission layer sets of the PUSCH may be transmitted simultaneously to multiple TRPs based on a plurality of panels/beams.

It should be understood that the plurality of transmission layer sets of the PUSCH may be transmitted in a spatial division multiplexing (SDM) manner.

In the second manner, the terminal device multiplexes the uplink control information (UCI) carried by the plurality of PUCCHs onto the one or more PUSCHs for transmission, which may include any of:

multiplexing, by the terminal device, UCI carried by a first PUCCH among the plurality of PUCCHs onto a first transmission layer set of the PUSCH for transmission;

multiplexing, by the terminal device, the UCI carried by the plurality of PUCCHs onto a target transmission layer set among the plurality of transmission layer sets of the PUSCH for transmission; or

in a case where the ACK/NACK feedback mode is joint feedback, multiplexing, by the terminal device, the UCI carried by the first PUCCH among the plurality of PUCCHs onto the first transmission layer set of the PUSCH for transmission; and in a case where the ACK/NACK feedback mode is separate feedback, multiplexing, by the terminal device, the UCI carried by the plurality of PUCCHs onto the target transmission layer set among the plurality of transmission layer sets of the PUSCH for transmission;

where the first transmission layer set is any one of the plurality of transmission layer sets, and a first transmission layer and the first PUCCH are transmitted based on same spatial information.

It may be understood that in some embodiments, the terminal device may multiplex the UCI carried by any one of the plurality of PUCCHs onto the transmission layer set associated with the PUCCH among the PUSCHs for transmission, in other words, the terminal device may carry the UCI carried by the PUCCH associated with the transmission layer set via any one transmission layer set of the plurality of PUSCHs.

As an example, the terminal device may multiplex the UCI carried by any one of the plurality of PUCCHs onto a transmission layer set among the plurality of transmission layer sets of the PUSCH that is transmitted based on the same spatial information as the PUCCH for transmission. Referring to FIG. 7, it is assumed that the plurality of PUCCHs include PUCCH 1 and PUCCH 2, and the PUSCH includes transmission layer set 1 and transmission layer set 2. The time domain resources of PUCCH 1, PUCCH 2 and PUSCH overlap. PUCCH 1 is transmitted based on spatial information 1, and PUCCH 2 is transmitted based on spatial information 2. In this scenario, the terminal device may multiplex the UCI carried by PUCCH 1 onto the transmission layer set 1 transmitted based on spatial information 1 in PUSCH for transmission, and multiplex the UCI carried by PUCCH 2 onto the transmission layer set 2 transmitted based on spatial information 2 in PUSCH for transmission.

It should be understood that the terminal device multiplexing the UCI carried by the PUCCH based on the same spatial information may ensure the complete transmission of all uplink information.

In some other embodiments, the terminal device may multiplex the UCI carried by the plurality of PUCCHs onto a certain one of the plurality of transmission layer sets of the PUSCH for transmission. In the embodiments of the present application, the transmission layer set is recorded as a target transmission layer set. Referring to FIG. 8, it is assumed that the plurality of PUCCHs include PUCCH 1 and PUCCH 2, and the PUSCH includes transmission layer set 1 and transmission layer set 2. The time domain resources of PUCCH 1, PUCCH 2 and PUSCH overlap. PUCCH 1 is transmitted based on spatial information 1, and PUCCH 2 is transmitted based on spatial information 2. In this scenario, the terminal device may multiplex both the UCI carried by PUCCH 1 and the UCI carried by PUCCH 2 onto the transmission layer set 1 in PUSCH for transmission, or onto the transmission layer set 2 in PUSCH for transmission.

In an embodiment of the present application, the target transmission layer set may be any one of the following contents.

1) The target transmission layer set is a transmission layer set associated with a first TCI state among the plurality of transmission layer sets. The first TCI state may be the 1st TCI state, the 2nd TCI state, ..., or the last TCI state among a plurality of TCI states configured by the network device. The first TCI state is not limited in the embodiments of the present application. It should be noted that the first TCI state may be a joint TCI state or an uplink TCI state, which is not limited in the embodiments of the present application.

2) The target transmission layer set is a transmission layer set with a first value of SRS resource set index values associated with the plurality of transmission layer sets. The first value may be the minimum value among the SRS resource set index values, the maximum value among the SRS resource set index values, or any of other fixed values, which is not limited in the embodiments of the present application. It may be understood that the terminal device may multiplex the UCI carried by the plurality of PUCCHs onto a transmission layer set associated with a fixed SRS resource set for transmission, and the implementation is simple and efficient.

3) The target transmission layer set is a transmission layer set with a second value of other reference signal resource set index values associated with the plurality of transmission layer sets. Here, other reference signals may include one or more of CSI-RS, DMRS or SSB, which is not limited in the embodiments of the present application. In addition, the second value may be the minimum value among other reference signal resource set index values, or the maximum value among other resource set index values, or any of other fixed values, which is not limited in the embodiments of the present application. It may be understood that the terminal device may multiplex the UCI carried by the plurality of PUCCHs onto a transmission layer set associated with a fixed one of other resource sets for transmission, and the implementation is simple and efficient.

4) The target transmission layer set is a transmission layer set with a first identifier of antenna panel identifiers associated with the plurality of transmission layer sets. The first identifier may be an identifier of any one of the plurality of antenna panels configured by the terminal device, which is not limited in the embodiments of the present application. It may be understood that the terminal device may multiplex the UCI carried by the plurality of PUCCHs onto a transmission layer set associated with a fixed antenna panel for transmission, and the implementation is simple and efficient.

5) The target transmission layer set is a transmission layer set with a third value of TRP index values associated with the plurality of transmission layer sets. The third value may be the minimum value, the maximum value, or any other fixed value among the TRP index values, which is not limited in the embodiments of the present application. It may be understood that the terminal device may multiplex the UCI carried by the plurality of PUCCHs onto a transmission layer set associated with a fixed TRP for transmission, and the implementation is simple and efficient.

6) The target transmission layer set is a transmission layer set with a fourth value of CORESET group index values associated with the plurality of transmission layer sets. The fourth value may be the maximum value, the minimum value, or any other fixed value among the CORESET index values, which is not limited in the embodiments of the present application. It may be understood that the terminal device may multiplex the UCI carried by the plurality of PUCCHs onto a transmission layer set associated with a fixed CORESET for transmission, and the implementation is simple and efficient.

7) The target transmission layer set is a transmission layer set with a first level of modulation and coding scheme MCS levels among the plurality of transmission layer sets. The first level may be any level in the MCS levels, such as the highest level, the second highest level, or the lowest level, which is not limited in the embodiments of the present application. For example, the terminal device may multiplex the UCI carried by the plurality of PUCCHs onto a transmission layer set with the highest MCS level for transmission, so as to increase the reliability of UCI transmission.

8) The target transmission layer set is each transmission layer set among the plurality of transmission layer sets. It may be understood that the terminal device may multiplex the UCI carried by the plurality of PUCCHs onto each transmission layer set in the PUSCH for transmission, so as to ensure that the uplink data is completely transmitted.

It should be noted that, in a case where the plurality of PUCCHs carry the same UCI, for example, the plurality of PUCCHs are transmitted in an SNF transmission manner, the SFN transmission means that each PUCCH carries the same content (i.e., the UCI is the same), and different PUCCHs are associated with different spatial information. In this case, the terminal device may multiplex the UCI onto each transmission layer set of the PUSCH for transmission, that is, the UCI is carried in each transmission layer set of the PUSCH to ensure the complete transmission of the UCI. In addition, in a case where the plurality of PUCCHs carry different UCI, the terminal device may combine or concatenate the UCI carried by the plurality of PUCCHs, and multiplex the combined UCI onto all transmission layer sets of the PUSCH for transmission.

It should be understood that the terminal device multiplexes the UCI carried by the plurality of PUCCHs onto a target transmission layer set among the plurality of transmission layer sets of the PUSCH for transmission, the implementation is simple and convenient, and the processing efficiency of the terminal device may be improved.

In still other embodiments, the terminal device may determine, based on the ACK/NACK feedback mode, whether to multiplex the UCI carried by any one of the plurality of PUCCHs onto a transmission layer set associated with the PUCCH in the PUSCH for transmission, or to multiplex the UCI carried by the plurality of PUCCHs onto a target transmission layer set in the PUSCH for transmission.

As an example, in a case where the ACK/NACK feedback mode is joint feedback, the terminal device may multiplex the UCI carried by any one of the plurality of PUCCHs onto a transmission layer set associated with the PUCCH among the plurality of transmission layer sets of PUSCH for transmission; and in a case where the ACK/NACK feedback mode is separate feedback, the terminal device may multiplex the UCI carried by the plurality of PUCCHs onto a target transmission layer set among the plurality of transmission layer sets of PUSCH for transmission. In this way, the complete transmission of uplink information may be guaranteed.

In another example, in a case where the ACK/NACK feedback mode is joint feedback, the terminal device may multiplex the UCI carried by the plurality of PUCCHs onto a target transmission layer set among the plurality of transmission layer sets of PUSCH for transmission; and in a case where the ACK/NACK feedback mode is separate feedback, the terminal device may multiplex the UCI carried by any one of the plurality of PUCCHs onto a transmission layer set associated with the PUCCH among the plurality of transmission layer sets of PUSCH for transmission.

In this way, the terminal device may select different UCI multiplexing manners for transmission depending on different feedback modes, thereby improving the implementation flexibility of the terminal device.

It should be noted that the terminal device may support multiplexing the UCI carried by any one of the plurality of PUCCHs onto the transmission layer set associated with the PUCCH in the plurality of transmission layer sets of PUSCH for transmission, and may also support multiplexing all the UCI carried by the plurality of PUCCHs onto the target transmission layer set among the plurality of transmission layer sets of PUSCH for transmission. The terminal device may also support both multiplexing the UCI carried by any one of the plurality of PUCCHs onto the transmission layer set associated with the PUCCH for transmission, and multiplexing all the UCI carried by the plurality of PUCCHs onto the target transmission layer set among the plurality of transmission layer sets of PUSCH for transmission.

In a case where the terminal device supports both multiplexing the UCI carried by any one of the plurality of PUCCHs onto the transmission layer set associated with the PUCCH for transmission, and multiplexing all the UCI carried by the plurality of PUCCHs onto the target transmission layer set among the plurality of transmission layer sets of PUSCH for transmission, the terminal device may select one of the manners for the above transmission based on the configuration/indication of the network device, or the terminal device determines which multiplexing manner is actually used for multiplexing transmission based on the ACK/NACK feedback mode, which is not limited in the embodiments of the present application.

It should be understood that in the second manner, the terminal device may multiplex the UCI carried by the plurality of PUCCHs onto the transmission layer set of PUSCH for transmission, thereby ensuring the complete transmission of all information.

Based on the above embodiments, in an embodiment of the present application, the plurality of PUCCHs transmitted by the terminal device may include a PUCCH triggered by one or more DCI, and/or a PUCCH configured by higher layer signaling.

Optionally, in a case where the PUCCH is a PUCCH triggered by DCI, the DCI may be a DCI format 1-1 or a DCI format 1-2, which is not limited in the embodiments of the present application.

Optionally, the higher layer signaling may include a radio resource control (RRC) signaling or other types of higher layer signaling, which is not limited in the embodiments of the present application.

In an embodiment of the present application, the plurality of PUCCHs may be transmitted via an SDM transmission manner. In addition, the transmission manner of the plurality of PUCCHs may further include SFN transmission and/or time domain repetition transmission. The limitation is not made in the embodiments of the present application.

It should be noted that the transmission manner of the plurality of PUCCHs may be configured by the network device. The network device may configure the transmission manner of the plurality of PUCCHs for the terminal device via the higher layer signaling (e.g., a RRC signaling or other types of higher layer signaling) or a physical layer signaling (e.g., an MAC CE or DCI).

In an example, referring to FIG. 9A and FIG. 9B, a single DCI may trigger simultaneous transmission of the plurality of PUCCHs, and the transmission manner of the plurality of PUCCHs may be SFN transmission. In addition, the plurality of PUSCHs may be single-DCI scheduled or multi-DCI scheduled, which is not limited in the embodiments of the present application. Here, the transmission manner of the plurality of PUSCHs may be SDM transmission or SFN transmission.

It should be noted that in this example, the terminal device may, in a case where the time domain resources of the plurality of PUCCHs overlap with the time domain resources of the one or more PUSCHs, use the method in the above embodiments to multiplex the UCI carried by the plurality of PUCCHs onto the one or more PUSCHs for transmission, or to transmit the plurality of PUCCHs and not to transmit the PUSCH among the one or more PUSCHs that has a time domain resource overlapping with the time domain resources of the plurality of PUCCHs.

In another example, referring to FIG. 10A and FIG. 10B, a single DCI may trigger simultaneous transmission of the plurality of PUCCHs, and the transmission manner of the plurality of PUCCHs may be SFN transmission and time domain repetition transmission. In addition, the plurality of PUSCHs may be single-DCI scheduled or multi-DCI scheduled, which is not limited in the embodiments of the present application. Here, the transmission manner of the plurality of PUSCHs may be SDM transmission or SFN transmission.

It should be noted that in this example, the terminal device may, in a case where the time domain resources of the plurality of PUCCHs overlap with the time domain resources of the one or more PUSCHs, use the method in the above embodiments to multiplex the UCI carried by the plurality of PUCCHs onto the one or more PUSCHs for transmission, or to transmit the plurality of PUCCHs and not to transmit the PUSCH among the one or more PUSCHs that has a time domain resource overlapping with the time domain resources of the plurality of PUCCHs. In particular, the terminal device preferentially adopts the latter manner for uplink transmission, that is, in a case where the time domain resources of the plurality of PUCCHs overlap with the time domain resources of the one or more PUSCHs, the terminal device is most likely to transmit the plurality of PUCCHs, and does not transmit the PUSCH among the one or more PUSCHs that has a time domain resource overlapping with the time domain resources of the plurality of PUCCHs.

In an embodiment of the present application, the plurality of PUCCHs are transmitted on a first carrier, and the one or more PUSCHs are transmitted on a second carrier; and the first carrier is the same as or different from the second carrier.

It should be noted that the plurality of PUCCHs may be single-DCI scheduled or multi-DCI scheduled. In addition, the one or more PUSCHs may also be single-DCI scheduled or multi-DCI scheduled. In actual applications, single-DCI scheduling and multi-DCI scheduling belong to two scheduling modes, and uplink information scheduled by DCI will not be transmitted on the same carrier.

In some embodiments, if the plurality of PUCCHs and the one or more PUSCHs are both single-DCI scheduled, or are both multi-DCI scheduled, the first carrier and the second carrier are the same. If the plurality of PUCCHs and the one or more PUSCHs are scheduled in different scheduling modes, the first carrier and the second carrier are different carriers.

In an embodiment of the present application, the information transmission method provided by the embodiments of the present application may further include the following contents.

The terminal device transmits first information, and correspondingly, the network device receives the first information. The first information may include one or more of:

first indication information, where the first indication information is used for indicating that the terminal device supports PUCCH and/or PUSCH transmissions triggered by one or more DCI on the first carrier and/or a frequency band where the first carrier is located; or

second indication information, where the second indication information is used for indicating that the terminal device supports PUCCH and/or PUSCH transmissions triggered by one or more DCI on the second carrier and/or a frequency band where the second carrier is located.

It may be understood that the terminal device may report the first information to the network device to inform DCI scheduling capability supported by the terminal device on different carriers. In this way, after determining the DCI scheduling capability of the terminal device on different carriers, the network device may perform data scheduling on different carriers based on the capability of the terminal device. In this way, normal uplink transmission of the terminal device may be guaranteed.

The information transmission method provided by the embodiments of the present application will be described below in conjunction with specific application scenarios.

Scenario 1, as shown in FIG. 11, the terminal device transmits a plurality of PUCCHs, including PUCCH 1 and PUCCH 2, based on different spatial information on carrier CC1, and transmits a plurality of PUSCHs, including PUSCH 1 and PUSCH 2, based on different spatial information on carrier CC2. Here, PUCCH 1 and PUSCH 1 are transmitted based on first spatial information, and PUCCH 2 and PUSCH 2 are transmitted based on second spatial information.

PUCCH 1 and PUCCH 2 are scheduled via the same DCI (the format of the DCI is DCU format 1-1 or 1-2), or PUCCH 1 and PUCCH 2 are configured via RRC signaling. The transmission manner of the PUCCH resources corresponding to PUCCH 1 and PUCCH 2 is configured as SFN transmission, that is, each PUCCH carry the same content, and different PUCCHs are associated with different spatial information. The configuration of the transmission manner is configured via RRC signaling or MAC CE, which is not limited in the embodiments of the present application.

In addition, PUSCH 1 and PUSCH 2 may be scheduled via different DCI, and the time domain resources of PUSCH 1 and PUSCH 2 may partially overlap or completely overlap. PUSCH 1 and PUSCH 2 may be PUSCHs scheduled by DCI, or configured grant PUSCHs.

In the Scenario 1, PUCCH 1 and PUCCH 2 are transmitted on carrier CC1, and PUSCH 1 and PUSCH 2 are transmitted on carrier CC2. The terminal device may report UE capability information to the network device, where the capability information may include that the terminal device supports PUCCH or PUSCH transmission based on single-DCI on carrier CC1 or a frequency band where carrier CC1 is located, and/or supports PUCCH or PUSCH transmission based on multi-DCI on carrier CC2 or a frequency band where carrier CC2 is located.

In the Scenario 1, the terminal device determines that the time domain resources of PUCCH 1, PUCCH 2, PUSCH 1 and PUSCH 2 overlap, and the terminal device may perform uplink transmission in any one of the following five manners.

Manner A, the UCI carried by PUCCH 1 associated with the first spatial information among the plurality of PUCCHs is multiplexed onto PUSCH 1 associated with the first spatial information among the plurality of PUSCHs, and the UCI carried by PUCCH 2 associated with the second spatial information among the plurality of PUCCHs is multiplexed onto PUSCH 2 associated with the second spatial information among the plurality of PUSCHs.

It should be understood that manner A may perform UCI multiplexing based on spatial information to ensure complete transmission of all information.

Manner B, the UCI carried by PUCCH 1 and PUCCH 2 is multiplexed onto a target PUSCH for transmission.

PUCCH 1 and PUCCH 2 are SFN transmissions and carry the same UCI, and thus the UCI carried by PUCCH 1 and PUCCH 2 may be multiplexed onto the target PUSCH for transmission. In addition, the target PUSCH may refer to the description in the above embodiments, and details are not repeated here for the sake of brevity.

It should be understood that manner B only needs to be multiplexed onto one target PUSCH, and the implementation is simple.

Manner C, in a case where the ACK/NACK feedback mode is joint feedback (ackNackFeedbackMode = joint), manner A is used; and in a case where the ACK/NACK feedback mode is separate feedback (ackNackFeedbackMode = separate), manner B is used.

Alternatively, in a case where the ACK/NACK feedback mode is joint feedback (ackNackFeedbackMode = joint), manner B is used; and in a case where the ACK/NACK feedback mode is separate feedback (ackNackFeedbackMode = separate), manner A is used.

It should be understood that the terminal device may select different multiplexing manners for uplink transmission based on different feedback modes, and the implementation is flexible.

Manner D, the terminal device transmits a plurality of PUCCHs and does not transmit one or more PUSCHs that overlap with the plurality of PUCCHs.

It should be understood that manner D is simple to implement, but will lose PUSCH information.

Manner E, if a priority of a plurality of PUCCHs is higher than a priority of a plurality of PUSCHs, manner D is used; and if the priority of the plurality of PUCCHs is lower than or equal to the priority of the plurality of PUSCHs, manner A or manner B is used.

It should be understood that the terminal device may determine the multiplexing manner based on the channel priority to ensure the transmission of high-priority channels and to ensure the integrity of information transmission to a certain extent.

Scenario 2, the terminal device transmits a plurality of PUCCHs, including PUCCH 1 and PUCCH 2, based on different spatial information on carrier CC1, and transmits one or more PUSCHs based on different spatial information on carrier CC2. Here, PUCCH 1 is transmitted based on the first spatial information, and PUCCH 2 is transmitted based on the second spatial information.

The related transmission description of PUCCH 1 and PUCCH 2 is the same as that of the above Scenario 1, and details are not repeated here for the sake of brevity.

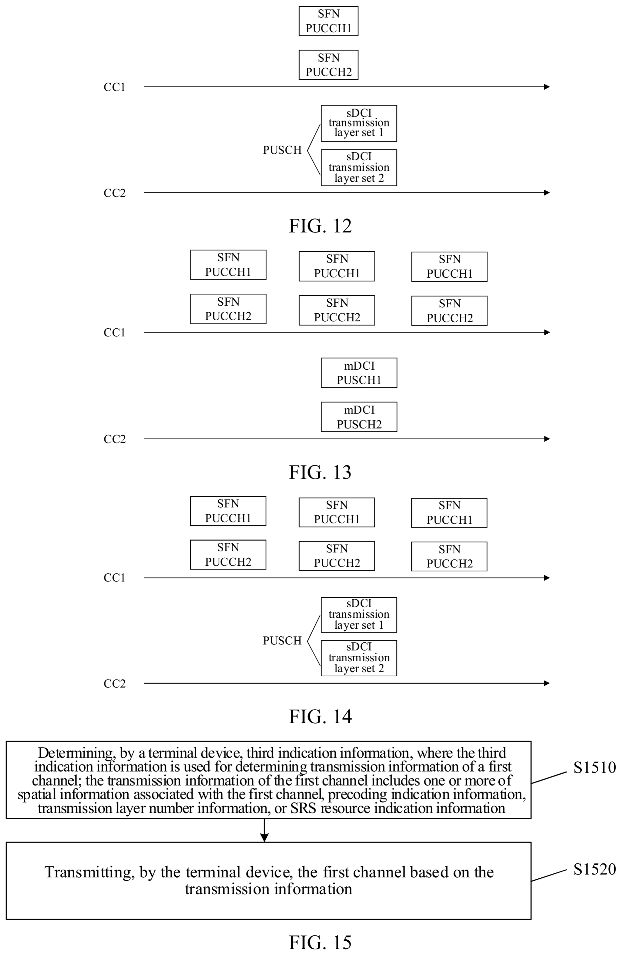

In addition, one or more PUSCHs may be scheduled via the same DCI. In a case where the one or more PUSCHs are one PUSCH, as shown in FIG. 12, the PUSCH may include two transmission layer sets, namely, transmission layer set 1 and transmission layer set 2, where transmission layer set 1 is transmitted based on spatial information 1, and transmission layer set 2 is transmitted based on spatial information 2. The transmission manner of the PUSCH is SDM transmission. In addition, in a case where the one or more PUSCHs are a plurality of PUSCHs, the transmission manner of the plurality of PUSCHs is SFN transmission.

In the Scenario 2, PUCCH 1 and PUCCH 2 are transmitted on carrier CC1, and the one or more PUSCHs may be transmitted on carrier CC2. The terminal device may report UE capability information to the network device, where the capability information may include that the terminal device supports PUCCH or PUSCH transmission based on single-DCI on carrier CC1 or a frequency band where carrier CC1 is located, and/or supports PUCCH or PUSCH transmission based on single-DCI on carrier CC2 or a frequency band where carrier CC2 is located.

It should be noted that, in a case where the one or more PUSCHs mentioned above are a plurality of PUSCHs, the terminal device may perform uplink transmission using the manners in the Scenario 1.

In addition, in a case where the one or more PUSCHs are one PUSCH (as shown in FIG. 12), the transmission manner of the PUSCH is SDM transmission, and the terminal device may perform uplink transmission in one of the following five manners.

Manner A', the UCI carried by PUCCH 1 associated with the first spatial information among the plurality of PUCCHs is multiplexed onto transmission layer set 1 associated with the first spatial information in PUSCH, and the UCI carried by PUCCH 2 associated with the second spatial information among the plurality of PUCCHs is multiplexed into transmission layer set 2 associated with the second spatial information in PUSCH.

It should be understood that manner A' may perform UCI multiplexing based on spatial information to ensure complete transmission of all information.

Manner B', the UCI carried by PUCCH 1 and PUCCH 2 is multiplexed onto a target transmission layer set among the plurality of transmission layer sets of PUSCH for transmission.

PUCCH 1 and PUCCH 2 are SFN transmissions and carry the same UCI, and thus the UCI carried by PUCCH 1 and PUCCH 2 may be multiplexed onto the target transmission layer set for transmission. In addition, the target transmission layer set may refer to the description in the above embodiments, and details are not repeated here for the sake of brevity.

It should be understood that manner B' only needs to be multiplexed onto a target transmission layer set in PUSCH for transmission, and the implementation is simple.

Manner C', in a case where the ACK/NACK feedback mode is joint feedback (ackNackFeedbackMode = joint), manner A' is used; and in a case where the ACK/NACK feedback mode is separate feedback (ackNackFeedbackMode = separate), manner B' is used.

Alternatively, in a case where the ACK/NACK feedback mode is joint feedback (ackNackFeedbackMode = joint), manner B' is used; and in a case where the ACK/NACK feedback mode is separate feedback (ackNackFeedbackMode = separate), manner A' is used.

It should be understood that the terminal device may select different multiplexing manners for uplink transmission based on different feedback modes, and the implementation is flexible.

Manner D', the terminal device transmits a plurality of PUCCHs, and does not transmit one or more PUSCHs that overlap with the plurality of PUCCHs.

It should be understood that manner D' is simple to implement, but will lose PUSCH information.

Manner E', if a priority of a plurality of PUCCHs is higher than a priority of a plurality of PUSCHs, manner D' is used; and if the priority of the plurality of PUCCHs is lower than or equal to the priority of the plurality of PUSCHs, manner A' or manner B' is used.

It should be understood that the terminal device may determine the multiplexing manner based on the channel priority to ensure the transmission of high-priority channels and to ensure the integrity of information transmission to a certain extent.

Scenario 3, the terminal device transmits a plurality of PUCCHs, including PUCCH 1 and PUCCH 2, based on different spatial information on CC1, where PUCCH 1 and PUCCH 2 are repeatedly transmitted in the time domain, and transmits one or more PUSCHs on CC2. Here, PUCCH 1 and PUSCH 1 are transmitted based on the first spatial information, and PUCCH 2 and PUSCH 2 are transmitted based on the second spatial information.

The transmission manner of the PUCCH resource corresponding to the PUCCH configures both the SFN transmission scheme and time domain repetition transmission, that is, each PUCCH carries the same content, and the PUCCH of the same time domain resource is associated with different spatial information. The transmission manner is configured via a RRC signaling or an MAC CE.

PUCCH 1 and PUCCH 2 are scheduled via the same DCI (the format of the DCI is DCU format 1-1 or 1-2), or PUCCH 1 and PUCCH 2 are configured via RRC signaling. The transmission manner of the PUCCH resources corresponding to PUCCH 1 and PUCCH 2 is configured as SFN transmission and time domain repetition transmission. Each PUCCH carries the same content, and the PUCCH of the same time domain resource is associated with different spatial information.

For one or more PUSCHs, in an implementation, as shown in FIG. 13, the number of the one or more PUSCHs is 2, PUSCH 1 and PUSCH 2 may be scheduled via different DCI, and the time domain resources of PUSCH 1 and PUSCH 2 partially overlap or completely overlap.

In this implementation, the terminal device may perform uplink transmission based on any one of manner A, manner B, manner C, manner D, and manner E in Scenario 1. Here, the terminal device preferentially uses manner D, that is, the terminal device transmits the plurality of PUCCHs, and does not transmit the one or more PUSCHs that overlap with the plurality of PUCCHs for uplink transmission.

In another implementation, as shown in FIG. 14, the number of the one or more PUSCHs is 1, and the PUSCH may include two transmission layer sets, namely transmission layer set 1 and transmission layer set 2, where transmission layer set 1 is transmitted based on spatial information 1, and transmission layer set 2 is transmitted based on spatial information 2. The transmission manner of the PUSCH is SDM transmission.

In this implementation, the terminal device may perform uplink transmission based on any one of manner A', manner B', manner C', manner D', and manner E' in Scenario 2. Here, the terminal device preferentially uses manner D', that is, the terminal device transmits the plurality of PUCCHs, and does not transmit the one or more PUSCHs that overlap with the plurality of PUCCHs for uplink transmission.

In actual applications, uplink transmission may include a multi-TRP transmission scheme and a single-TRP transmission scheme. The terminal device simultaneously transmits a plurality of PUSCHs to multiple TRPs on a plurality of antenna panels, which is referred to as a multi-TRP transmission scheme. The plurality of PUSCHs here may be multi-DCI scheduled or single-DCI scheduled, which is not limited in the embodiments of the present application. It should be noted that the transmission manner of the plurality of PUSCHs scheduled by single-DCI includes SDM transmission and SFN transmission. In SDM transmission, each PUSCH carries a respective transmission layer set, which may also be understood as that one PUSCH transmits a plurality of transmission layer sets via SDM.

In addition, the transmission of PUSCH by the terminal device to a single TRP is recorded as a single-TRP transmission scheme.

The network device may dynamically indicate whether the transmission scheme of the terminal device is a single-TRP transmission scheme or a multi-TRP transmission scheme via an information field in DCI. In order to distinguish from the first indication information and the second indication information in the above embodiments, the information field is recorded here as third indication information. For example, the third indication information takes a first value (e.g., a bit state of '00' and/or '01'), which may be used to indicate that the PUSCH is associated with an SRS resource set. The third indication information takes a second value (e.g., a bit state of '10' and/or '11'), which may be used to indicate that the PUSCH is associated with two SRS resource sets.

PUSCH being associated with one SRS resource set is recorded as a single-TRP transmission scheme, and PUSCH being associated with two SRS resource sets is recorded as a multi-TRP transmission scheme. The third indication information is also used to indicate one or more of precoding indication information of the PUSCH, transmission layer number information, or SRS resource indication information. The value of the third indication information indicates different contents and thus corresponds different numbers of DCI bits. The specific indication method of the third indication information will be described in detail below.

In an embodiment of the present application, an information transmission method is provided. Referring to FIG.

15, the information transmission method may include the following steps:

S1510, determining, by a terminal device, third indication information, where the third indication information is used for determining transmission information of a first channel; the transmission information of the first channel includes one or more of spatial information associated with the first channel, precoding indication information, transmission layer number information, or SRS resource indication information; and

S1510, transmitting, by the terminal device, the first channel based on the transmission information.

Correspondingly, a network device may receive the first channel transmitted by the terminal device. The first channel is transmitted based on the transmission information, and the transmission information includes one or more of spatial information associated with the first channel, precoding indication information, transmission layer number information, or SRS resource indication information. The transmission information is indicated based on the third indication information.

In some embodiments, the first channel may be a PUSCH or a PUCCH, which is not limited in the embodiments of the present application.

In some embodiments, the third indication information is an SRS resource set indicator information field.

In some embodiments, the spatial information includes one or more of:

a TCI state, a control resource set group index value, a sounding reference signal resource set index value; other reference signal resource set index values; a sounding reference signal index value; other reference signal index values; an antenna panel identifier; or a TRP index value.

For the related explanation of the spatial information, reference may be made to the description in the above embodiments, and details are not repeated here for the sake of brevity.

In some embodiments, the third indication information indicates the transmission information of the first channel in any one of three manners: a first manner, a second manner, and a third manner.

In the first manner, the third indication information is used for indicating an SRS resource set associated with the first channel, and the SRS resource set associated with the first channel has an associated SRS resource indicator (SRI) field and/or an associated precoding information and number of layers indication (TPMI) field, where an SRI field and/or a TPMI field not associated with the SRS resource set are reserved information fields.

It should be noted that the SRI field and/or the TPMI field may be carried via the DCI.

For example, the third indication information is n bits, for example, n=2. Referring to Table 1, the third indication information includes one or more of the following contents.

In a case where the value of the third indication information is a first value (e.g., a bit state of 00 or other values), the first channel is associated with a first SRS resource set. The first SRS resource set is associated with a first SRI field and a first TPMI field, and a second SRI field and a second TPMI field are reserved information fields.

In a case where the value of the third indication information is a second value (e.g., a bit state of 01 or other values), a first PUSCH is associated with a second SRS resource set. The second SRS resource set is associated with a first SRI field and a first TPMI field, and a second SRI field and a second TPMI field are reserved information fields.

In a case where the value of the third indication information is a third value (e.g., a bit state of 10 or other values), a first PUSCH is associated with a first SRS resource set, and a second PUSCH is associated with a second SRS resource set. The first SRS resource set is associated with a first SRI field and a first TPMI field, and the second SRS resource set is associated with a second SRI field and a second TPMI field.

In a case where the value of the third indication information is a fourth value (e.g., a bit state of 11 or other values), it is in a reserved state, or a first PUSCH is associated with a second SRS resource set, and a second PUSCH is associated with a first SRS resource set. The first SRS resource set is associated with a second SRI field and a second TPMI field, and the first SRS resource set is associated with the second SRI field and the second TPMI field.

Table 1

| Bit state | SRS resource set | SRI/TPMI field(s) |
|---|---|---|
| 00 | Single-TRP transmission associated with the first SRS resource set | The first SRS resource set is associated with a first SRI field and a first TPMI field, and a second SRI field and a second TPMI field are reserved. |
| 01 | Single-TRP transmission associated with the second SRS resource set | The second SRS resource set is associated with a first SRI field and a first TPMI field, and a second SRI field and a second TPMI field are reserved. |

(continued)

| Bit state | SRS resource set | SRI/TPMI field(s) |
|---|---|---|
| 10 | SDM/SFN transmission scheme associated with the first and second SRS resource sets | The first SRS resource set is associated with a first SRI field and a first TPMI field, and the second SRS resource set is associated with a second SRI field and a second TPMI field. |
| 11 | Reserved state | Reserved state, or the first PUSCH is associated with a second SRS resource set, and the second PUSCH is associated with a first SRS resource set. The first SRS resource set is associated with a second SRI field and a second TPMI field, and the first SRS resource set is associated with the second SRI field and the second TPMI field. |

It should be noted that an SRS resource set corresponding to each bit state in Table 1 and SRI/TPMI field(s) may each be implemented separately, that is, contents in different rows in Table 1 do not affect each other.

In the embodiments of the present application, in the second manner, the third indication information is used for indicating an SRS resource set associated with the first channel, and the SRS resource set associated with the first channel has an associated SRI field and/or an associated TPMI field, where there is no SRI field and/or TPMI field that are not associated with the SRS resource set.

It should be noted that the SRI field and/or the TPMI field may be carried via the DCI. There is no SRI field and/or TPMI field that are not associated with the SRS resource set, which may mean that in a case where the third indication information is used for indicating a single-TRP transmission scheme, the DCI only includes one SRI and/or TPMI field. In other words, the DCI may not include an SRI field and/or a TPMI field that are not associated with the SRS resource set (or have no association with the SRS resource set).

For example, the third indication information is n bits, for example, n=2. Referring to Table 2, the third indication information includes one or more of the following contents.

In a case where the value of the third indication information is a first value (e.g., a bit state of 00 or other values), a first PUSCH is associated with a first SRS resource set. The first SRS resource set is associated with a first SRI field and a first TPMI field, and a second SRI field and a second TPMI field are absent, which may be understood as only the first SRI field and the first TPMI field exist.

In a case where the value of the third indication information is a second value (e.g., a bit state of 01 or other values), a first PUSCH is associated with a second SRS resource set. The second SRS resource set is associated with a first SRI field and a first TPMI field, and a second SRI field and a second TPMI field are absent, which may be understood as only the first SRI field and the first TPMI field exist.

In a case where the value of the third indication information is a third value (e.g., a bit state of 10 or other values), a first PUSCH is associated with a first SRS resource set, and a second PUSCH is associated with a second SRS resource set. The first SRS resource set is associated with a first SRI field and a first TPMI field, and the second SRS resource set is associated with a second SRI field and a second TPMI field.

In a case where the value of the third indication information is a fourth value (e.g., a bit state of 11 or other values), it is in a reserved state, or a first PUSCH is associated with a second SRS resource set, and a second PUSCH is associated with a first SRS resource set. The first SRS resource set is associated with a second SRI field and a second TPMI field, and the first SRS resource set is associated with the second SRI field and the second TPMI field.

| Bit state | SRS resource set | SRI/TPMI field(s) |
|---|---|---|
| 00 | Single-TRP transmission associated with the first SRS resource set | The first SRS resource set is associated with a first SRI field and a first TPMI field, and a second SRI field and a second TPMI field are absent. |
| 01 | Single-TRP transmission associated with the second SRS resource set | The second SRS resource set is associated with a first SRI field and a first TPMI field, and a second SRI field and a second TPMI field are absent. |

(continued)

| Bit state | SRS resource set | SRI/TPMI field(s) |
|---|---|---|
| 10 | SDM/SFN transmission scheme associated with first and second SRS resource sets | The first SRS resource set is associated with a first SRI field and a first TPMI field, and the second SRS resource set is associated with a second SRI field and a second TPMI field. |
| 11 | Reserved state | Reserved state, or the first PUSCH is associated with a second SRS resource set, and the second PUSCH is associated with a first SRS resource set. The first SRS resource set is associated with a second SRI field and a second TPMI field, and the first SRS resource set is associated with the second SRI field and the second TPMI field. |

It should be noted that an SRS resource set corresponding to each bit state in Table 2 and SRI/TPMI field(s) may each be implemented separately, that is, contents in different rows in Table 2 do not affect each other.

In the embodiments of the present application, in the third manner, the third indication information is used for indicating an SRS resource set associated with the first channel, and the SRS resource set associated with the first channel is associated with an SRI field after a plurality of SRI fields are connected in series and/or a TPMI field after a plurality of TPMIs are connected in series.

For example, the third indication information is n bits, for example, n=2. Referring to Table 3, the third indication information includes one or more of the following contents.

In a case where the value of the third indication information is a first value (e.g., a bit state of 00 or other values), a first PUSCH is associated with a first SRS resource set. The first SRS resource set is associated with an SRI field after connection in serious and a TPMI field after connection in serious. The SRI field after connection in serious is a first SRI field and a second SRI field connected in series, and the TPMI field after connection in serious is a first TPMI field and a second TPMI field connected in series.

In a case where the value of the third indication information is a first value (e.g., a bit state of 00 or other values), a first PUSCH is associated with a second SRS resource set. The second SRS resource set is associated with an SRI field after connection in serious and a TPMI field after connection in serious. The SRI field after connection in serious is a first SRI field and a second SRI field connected in series, and the TPMI field after connection in serious is a first TPMI field and a second TPMI field connected in series.

In a case where the value of the third indication information is a third value (e.g., a bit state of 10 or other values), a first PUSCH is associated with a first SRS resource set, and a second PUSCH is associated with a second SRS resource set. The first SRS resource set is associated with a first SRI field and a first TPMI field, and the second SRS resource set is associated with a second SRI field and a second TPMI field.

In a case where the value of the third indication information is a fourth value (e.g., a bit state of 11 or other values), it is in a reserved state, or a first PUSCH is associated with a second SRS resource set, and a second PUSCH is associated with a first SRS resource set. The first SRS resource set is associated with a second SRI field and a second TPMI field, and the first SRS resource set is associated with the second SRI field and the second TPMI field.

| Bit state | SRS resource set | SRI/TPMI field(s) |
|---|---|---|
| 00 | Single-TRP transmission associated with the first SRS resource set | The first SRS resource set is associated with an SRI field after connection in serious and a TPMI field after connection in serious. |
| 01 | Single-TRP transmission associated with the second SRS resource set | The second SRS resource set is associated with an SRI field after connection in serious and a TPMI field after connection in serious. |

(continued)

| Bit state | SRS resource set | SRI/TPMI field(s) |
|---|---|---|
| 10 | SDM/SFN transmission scheme associated with first and second SRS resource sets | The first SRS resource set is associated with a first SRI field and a first TPMI field, and the second SRS resource set is associated with a second SRI field and a second TPMI field. |
| 11 | Reserved state | Reserved state, or the first PUSCH is associated with a second SRS resource set, and the second PUSCH is associated with a first SRS resource set. The first SRS resource set is associated with a second SRI field and a second TPMI field, and the first SRS resource set is associated with the second SRI field and the second TPMI field. |

It should be noted that an SRS resource set corresponding to each bit state in Table 3 and SRI/TPMI field(s) may each be implemented separately, that is, contents in different rows in Table 3 do not affect each other.

In some embodiments, the terminal device determining the third indication information includes any one of the following contents.

The terminal device determines the content of the third indication information based on fourth indication information.

The terminal device determines the content of the third indication information based on fifth indication information.

The terminal device determines the content of the third indication information based on a first rule.

The fourth indication information is used for indicating any one of the first manner, the second manner, or the third manner. The fourth indication information is configured or indicated by a network device, where the fourth indication information is carried via a higher layer signaling or a physical layer signaling. For example, the fourth indication information may be carried via a RRC signaling or an MAC CE signaling.

The fourth indication information is used for indicating any one of the first manner, the second manner, or the third manner

For example, the fourth indication information may perform indication in the following manner:

```
Fourth indication information {
enumerate {first manner, second manner, third manner}
}
or,
Fourth indication information {
enumerate {second manner, third manner }
}.
```

In some embodiments, the terminal device may determine the content of the third indication information based on the fifth indication information. The fifth indication information may include one or more of:

1. a maximum number of transmission layers of a single-TRP transmission scheme;
2. a maximum number of transmission layers of a multi-TRP transmission scheme;
3. a type of a codebook subset of a PUSCH in the single-TRP transmission scheme;
4. a type of a codebook subset of a PUSCH in the multi-TRP transmission scheme;
5. an uplink full power transmission mode in the single-TRP transmission scheme;
6. an uplink full power transmission mode in the multi-TRP transmission scheme;
7. a number of SRS ports p in the single-TRP transmission scheme; or
8. a number of SRS ports q corresponding to each antenna panel in the multi-TRP transmission scheme.

In a possible implementation, in a case where the fifth indication information indicates that the maximum number of transmission layers of a single-TRP transmission scheme is m and the maximum number of transmission layers of a multi-TRP transmission scheme is n, the third indication information may be determined based on the first manner, the second manner, or the third manner. For example, in a case of m=4 and n=1, the content of the third indication information is the second manner; and in other cases, the content of the third indication information is the first manner or the third manner. For example, in a case of m=n=2, the content of the third indication information is the first manner; and in other cases, the content of the third indication information is the second manner or the third manner. For example, in a case of m=4 and n=2, the content of the third indication information is the first manner; and in other cases, the content of the third indication information is the second manner or the third manner.

In a possible implementation, in a case where the fifth indication information indicates that the type of the codebook subset of the PUSCH of the single-TRP transmission scheme is a first type and the type of the codebook subset of the PUSCH of the multi-TRP transmission scheme is a second type, the content of the third indication information is the first manner, the second manner or the third manner. For example, in a case where the first type and the second type are both noncoherent, the content of the third indication information is the second manner; and in other cases, the content of the third indication information is the first manner or the third manner. For example, in a case where the first type includes fully coherence, and the second type is noncoherent and/or partially coherent, the content of the third indication information is the first manner; and in other cases, the content of the third indication information is the second manner or the third manner.

In a possible implementation, in a case where the fifth indication information indicates that the uplink full power transmission mode in the single-TRP transmission scheme is a first mode and the uplink full power transmission mode in the multi-TRP transmission scheme is a second mode, the content of the third indication information is the first manner, the second manner or the third manner. For example, in a case where the first mode and the second mode are both full power modes 1, the content of the third indication information is the first manner; and in other cases, the content of the third indication information is the second manner or the third manner.

In a possible implementation, in a case where the fifth indication information indicates that the first mode in the single-TRP transmission scheme and the second mode in the multi-TRP transmission scheme are full power modes 0 or full power modes 2 or not configured with full power modes, and the maximum number of transmission layers m of the single-TRP transmission scheme is equal to the maximum number of transmission layers n of the multi-TRP transmission scheme (m=n), the content of the third indication information is the second manner; in a case where the first mode in the single-TRP transmission scheme and the second mode in the multi-TRP transmission scheme are full power modes 0 or full power modes 2 or not configured with full power modes, and the maximum number of transmission layers m of the single-TRP transmission scheme is greater than or equal to twice the maximum number of transmission layers n of the multi-TRP transmission scheme (m>=2n), the content of the third indication information is the second manner; and in other cases, the content of the third indication information is the third manner.

In a possible implementation, in a case where the fifth indication information indicates that the first mode in the single-TRP transmission scheme and the second mode in the multi-TRP transmission scheme are full power modes 0 or full power modes 2 or not configured with full power modes, and the maximum number of transmission layers m of the single-TRP transmission scheme is equal to the maximum number of transmission layers n of the multi-TRP transmission scheme (m=n), the content of the third indication information is the first manner; in a case where the first mode in the single-TRP transmission scheme and the second mode in the multi-TRP transmission scheme are full power modes 0 or full power modes 2 or not configured with full power modes, the maximum number of transmission layers m of the single-TRP transmission scheme is greater than or equal to twice the maximum number of transmission layers n of the multi-TRP transmission scheme (m>=2n), and p=2q, the content of the third indication information is the second manner; and in other cases, the content of the third indication information is the third manner.

In addition, in some embodiments, the terminal device determining the third indication information based on the first rule, includes:

in a case where the fourth indication information is received, determining the third indication information based on a manner indicated by the fourth indication information; and
in a case where the fourth indication information is not received, determining the third indication information based on the first manner.

It should be noted that among the above three manners, the implementation of the first manner (i.e., the third indication information is used for indicating the SRS resource set associated with the first channel, and the SRS resource set associated with the first channel has an associated SRI field and/or an associated TPMI field, where the SRI field and/or the TPMI field not associated with the SRS resource set are reserved information fields) is simpler than that of the second manner and third manner. Therefore, in a case where the terminal device does not receive the fourth indication information, the terminal device may determine the content specifically indicated by the third indication information based on the first manner, so as to reduce the implementation complexity of the terminal device.

It should be understood that the terminal device may determine the third indication information, and determine one or more of spatial information associated with the first channel, precoding indication information, transmission layer number information, or SRS resource indication information based on the third indication information. In this way, the terminal device may transmit the first channel based on one or more of the spatial information associated with the first channel, the precoding indication information, the transmission layer number information, or the SRS resource indication information, thereby ensuring the correct transmission of the uplink information.

The preferred embodiments of the present application are described in detail above in conjunction with the accompanying drawings. However, the present application is not limited to the specific details in the above embodiments. Within the technical concept of the present application, a variety of simple modifications may be made to the technical solution of the present application, and these simple modifications all fall within the protection scope of the present application. For example, the various specific technical features described in the above specific embodiments may be combined in any suitable manner without contradiction. In order to avoid unnecessary repetition, various possible combinations will not further be explained in the present application. As another example, the various implementations of the present application may be arbitrarily combined, and as long as they do not violate the concept of the present application, they should also be regarded as the contents disclosed in the present application. As another example, under the premise of no conflict, the various embodiments and/or the technical features in the various embodiments described in the present application may be arbitrarily combined with the prior art, and the technical solution obtained after the combination should also fall within the protection scope of the present application.

It should also be understood that in the various method embodiments of the present application, values of the serial numbers of each of the above-mentioned processes do not mean an order of execution. The execution order of each process should be determined by its function and internal logic, and should not constitute any limitation on the implementation process of the embodiments of the present application. In addition, in the embodiments of the present application, the terms "downlink", "uplink" and "sidelink" are used to indicate the transmission directions of signals or data, where the term "downlink" is used to indicate that the transmission direction of the signal or data is a first direction from a site to a user equipment of a cell, the term "uplink" is used to indicate that the transmission direction of the signal or data is a second direction from a user equipment of a cell to a site, and the term "sidelink" is used to indicate that the transmission direction of the signal or data is a third direction from a user equipment 1 to a user equipment 2. For example, a "downlink signal" indicates that the transmission direction of the signal is the first direction. In addition, in the embodiments of the present application, the term "and/or" is only an association relationship for describing associated objects, which means that there may be three relationships. Specifically, A and/or B may represent three cases that: A exists alone, both A and B exist, and B exists alone. In addition, the character "/" in herein generally means that related objects before and after "/" are in an "or" relationship.

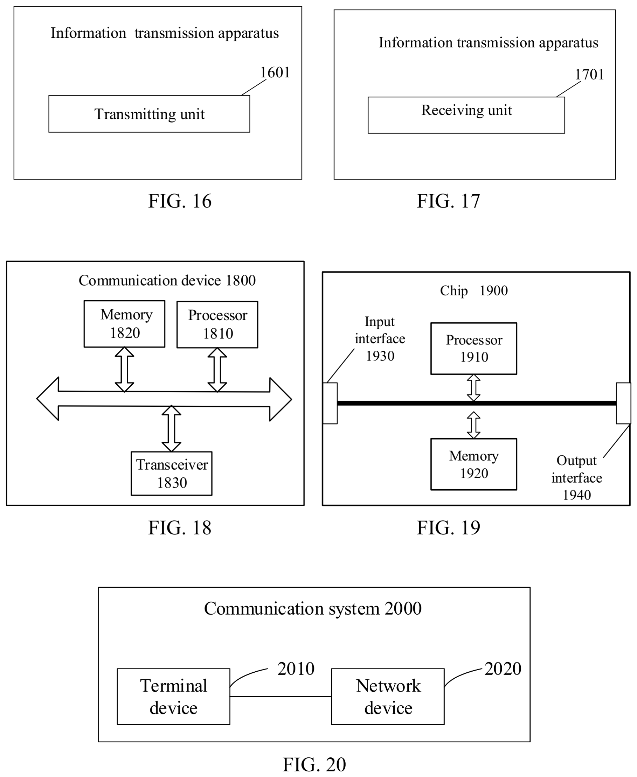

FIG. 16 is a first structural composition diagram of an information transmission apparatus provided by the embodiments of the present application, which is applied to a terminal device. As shown in FIG. 16, the information transmission apparatus includes:

a transmitting unit 1601, configured to determine that time domain resources of a plurality of PUCCHs partially or completely overlap with time domain resources of one or more PUSCHs, multiplex UCI carried by the plurality of PUCCHs onto the one or more PUSCHs for transmission, or transmit the plurality of PUCCHs, and not transmit a PUSCH among the one or more PUSCHs that has a time domain resource overlapping with the time domain resources of the plurality of PUCCHs;
where the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

In some embodiments, the transmitting unit 1501 is further configured to determine, based on protocol specifications, to multiplex the UCI carried by the plurality of PUCCHs onto the one or more PUSCHs for transmission, or determine to transmit the plurality of PUCCHs and not to transmit the PUSCH among the one or more PUSCHs that has a time domain resource overlapping with the time domain resources of the plurality of PUCCHs; or determine, based on a channel priority, to multiplex the UCI carried by the plurality of PUCCHs onto the one or more PUSCHs for transmission, or determine to transmit the plurality of PUCCHs and not to transmit the PUSCH among the one or more PUSCHs that has a time domain resource overlapping with the time domain resources of the plurality of PUCCHs.

In some embodiments, in a case where a channel priority of the plurality of PUCCHs is higher than a channel priority of the one or more PUSCHs, the plurality of PUCCHs are transmitted, and the PUSCH among the one or more PUSCHs that has a time domain resource overlapping with the time domain resources of the plurality of PUCCHs are not transmitted; and in a case where the channel priority of the plurality of PUCCHs is lower than or equal to the channel priority of the one or more PUSCHs, the UCI carried by the plurality of PUCCHs is multiplexed onto the one or more PUSCHs for transmission.

In some embodiments, the one or more PUSCHs include a plurality of PUSCHs, and the plurality of PUSCHs are transmitted based on different spatial information.

The transmitting unit 1501 is further configured to perform any one of: multiplexing UCI carried by a first PUCCH among the plurality of PUCCHs onto a first PUSCH among the one or more PUSCHs for transmission;

multiplexing, by the terminal device, the UCI carried by the plurality of PUCCHs onto a target PUSCH among the one or more PUSCHs for transmission; or

in a case where an ACK/NACK feedback mode is joint feedback, multiplexing the UCI carried by the first PUCCH among the plurality of PUCCHs onto the first PUSCH among the one or more PUSCHs for transmission; and in a case where the ACK/NACK feedback mode is separate feedback, multiplexing the UCI carried by the plurality of PUCCHs onto the target PUSCH among the one or more PUSCHs for transmission;

where the first PUCCH is any one of the plurality of PUCCHs, and the first PUCCH and the first PUSCH are transmitted based on same spatial information.

In some embodiments, the target PUSCH includes any one of:

the target PUSCH being a PUSCH associated with a first TCI state among the plurality of PUSCHs;
the target PUSCH being a PUSCH with a first value of sounding reference signal resource set index values associated with the plurality of PUSCHs;
the target PUSCH being a PUSCH with a second value of other reference signal resource set index values associated with the plurality of PUSCHs;
the target PUSCH being a PUSCH with a first identifier of antenna panel identifiers associated with the plurality of PUSCHs;
the target PUSCH being a PUSCH with a third value of TRP index values associated with the plurality of PUSCHs;
the target PUSCH being a PUSCH with a fourth value of control resource set (CORESET) group index values associated with the plurality of PUSCHs;
the target PUSCH being a PUSCH transmitted in a first order among the plurality of PUSCHs;
the target PUSCH being a PUSCH scheduled in a second order among the plurality of PUSCHs;
the target PUSCH being a PUSCH with a first level of modulation and coding scheme (MCS) levels among the plurality of PUSCHs; or
the target PUSCH being each PUSCH among the plurality of PUSCHs. This is for SFN transmission. Since the same UCI is transmitted, the same UCI is carried in each PUSCH.

In some embodiments, the plurality of PUSCHs includes a PUSCH scheduled by one or more downlink control information (DCI) and/or a configured authorized PUSCH.

In some embodiments, the one or more PUSCHs include a PUSCH, the PUSCH includes a plurality of transmission layer sets, and the plurality of transmission layer sets are transmitted based on different spatial information.

The transmitting unit 1601 is further configured to perform any one of:

multiplexing UCI carried by a first PUCCH among the plurality of PUCCHs onto a first transmission layer set of the PUSCH for transmission;
multiplexing the UCI carried by the plurality of PUCCHs onto a target transmission layer set among the plurality of transmission layer sets of the PUSCH for transmission; or
in a case where an ACK/NACK feedback mode is joint feedback, multiplexing the UCI carried by the first PUCCH among the plurality of PUCCHs onto the first transmission layer set of the PUSCH for transmission; and in a case where the ACK/NACK feedback mode is separate feedback, multiplexing the UCI carried by the plurality of PUCCHs onto the target transmission layer set among the plurality of transmission layer sets of the PUSCH for transmission;
where the first transmission layer set is any one of the plurality of transmission layer sets, and a first transmission layer and the first PUCCH are transmitted based on same spatial information.

In some embodiments, the target transmission layer set includes any one of:

the target transmission layer set being a transmission layer set associated with a first TCI state among the plurality of transmission layer sets;
the target transmission layer set being a transmission layer set with a first value of sounding reference signal resource set index values associated with the plurality of transmission layer sets;
the target transmission layer set being a transmission layer set with a second value of other reference signal resource set index values associated with the plurality of transmission layer sets;
the target transmission layer set being a transmission layer set with a first identifier of antenna panel identifiers associated with the plurality of transmission layer sets;
the target transmission layer set being a transmission layer set with a third value of TRP index values associated with the plurality of transmission layer sets;
the target transmission layer set being a transmission layer set with a fourth value of control resource set (CORESET) group index values associated with the plurality of transmission layer sets;

the target transmission layer set being a transmission layer set with a first level of modulation and coding scheme (MCS) levels among the plurality of transmission layer sets; or

the target transmission layer set being each transmission layer set among the plurality of transmission layer sets.

In some embodiments, a transmission manner of the plurality of transmission layer sets of the PUSCH is time division multiplexing (SDM) transmission.

In some embodiments, the spatial information includes one or more of:

a TCI state;

a control resource set group index value;

a sounding reference signal resource set index value;

other reference signal resource set index values;

a sounding reference signal index value;

other reference signal index values;

an antenna panel identifier; or

a TRP index value.

In some embodiments, the other reference signals include one or more of:

a channel state information reference signal (CSI-RS), a demodulation reference signal (DMRS), or a synchronization reference signal block (SSB).

In some embodiments, the plurality of PUCCHs include a PUCCH triggered by one or more DCI and/or a PUCCH configured by a higher layer signaling.

In some embodiments, a transmission manner of the plurality of PUCCHs includes single frequency network (SFN) transmission and/or time domain repetition transmission.

In some embodiments, the plurality of PUCCHs are transmitted on a first carrier, and the one or more PUSCHs are transmitted on a second carrier; and the first carrier is the same as or different from the second carrier.

In some embodiments, the transmitting unit 1601 is further configured to transmit first information, where the first information includes one or more of:

first indication information, where the first indication information is used for indicating that the terminal device supports PUCCH and/or PUSCH transmissions triggered by one or more DCI on the first carrier and/or a frequency band where the first carrier is located; or

second indication information, where the second indication information is used for indicating that the terminal device supports PUCCH and/or PUSCH transmissions triggered by one or more DCI on the second carrier and/or a frequency band where the second carrier is located.

In an embodiment of the present application, the first information transmission apparatus may further include a determining unit.

The determining unit is configured to determine third indication information, where the third indication information is used for indicating transmission information of a first channel; and the transmission information includes one or more of spatial information associated with the first channel, precoding indication information, transmission layer number information, or SRS resource indication information.

The transmitting unit 1601 is further configured to transmit the first channel based on the transmission information.

In some embodiments, the third indication information indicates the transmission information of the first channel in any one of a first manner, a second manner or a third manner;

where in the first manner, the third indication information is used for indicating an SRS resource set associated with the first channel, and the SRS resource set associated with the first channel has an associated sounding reference signal indication information (SRI) field and/or an associated precoding information and number of layers indication information (TPMI) field, where an SRI field and/or a TPMI field not associated with the SRS resource set are reserved information fields;

in the second manner, the third indication information is used for indicating the SRS resource set associated with the first channel, and the SRS resource set associated with the first channel has an associated SRI field and/or an associated TPMI field, where there is no SRI field and/or TPMI field that are not associated with the SRS resource set; and

in the third manner, the third indication information is used for indicating the SRS resource set associated with the first channel, the SRS resource set associated with the first channel is associated with an SRI field after a plurality of SRI fields are connected in series and/or a TPMI field after a plurality of TPMIs are connected in series.

In some embodiments, the determining unit is further configured to determine the third indication information based on any one of:

fourth indication information, where the fourth indication information is used for indicating any one of the first manner, the second manner, or the third manner;
fifth indication information, where the fifth indication information is used for indicating one or more of: a maximum number of transmission layers of single-TRP transmission and/or multi-TRP transmission, a type of a codebook subset of the single-TRP transmission and/or the multi-TRP transmission, an uplink full power transmission mode of the single-TRP transmission and/or the multi-TRP transmission, or a number of SRS ports of the single-TRP transmission and/or the multi-TRP transmission; or
a first rule.

In some embodiments, the fourth indication information is carried via a higher layer signaling or a physical layer signaling.
In some embodiments, the fifth indication information includes one or more of:

a maximum number of transmission layers of a single-TRP transmission scheme;
a maximum number of transmission layers of a multi-TRP transmission scheme;
a type of a codebook subset of a PUSCH in the single-TRP transmission scheme;
a type of a codebook subset of a PUSCH in the multi-TRP transmission scheme;
an uplink full power transmission mode in the single-TRP transmission scheme;
an uplink full power transmission mode in the multi-TRP transmission scheme;
a number of SRS ports in the single-TRP transmission scheme; or
a number of SRS ports corresponding to each antenna panel in the multi-TRP transmission scheme.

In some embodiments, the determining unit is further configured to, in a case where the fourth indication information is received, determine the third indication information based on a manner indicated by the fourth indication information; and
in a case where the fourth indication information is not received, determine the third indication information based on the first manner.
FIG. 17 is a second structural composition diagram of an information transmission apparatus provided by the embodiments of the present application, which is applied to a network device. As shown in FIG. 17, the information transmission apparatus includes:

a receiving unit 1701, configured to, in a case where time domain resources of a plurality of PUCCHs of a terminal device partially overlap or completely overlap with time domain resources of one or more PUSCHs, expect UCI carried by the plurality of PUCCHs to be multiplexed onto the one or more PUSCHs for transmission, or expect to receive the plurality of PUCCHs and expect not to receive a PUSCH among the one or more PUSCHs that has a time domain resource overlapping with the time domain resources of the plurality of PUCCHs;
where the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

In some embodiments, the network device expecting the uplink control information (UCI) carried by the plurality of PUCCHs to be multiplexed onto the one or more PUSCHs for transmission, or the network device receiving the plurality of PUCCHs and expecting not to receive the PUSCH among the one or more PUSCHs that has a time domain resource overlapping with the time domain resources of the plurality of PUCCHs, is determined based on protocol specifications; alternatively, the network device expecting the uplink control information (UCI) carried by the plurality of PUCCHs to be multiplexed onto the one or more PUSCHs for transmission, or the network device receiving the plurality of PUCCHs and expecting not to receive the PUSCH among the one or more PUSCHs that has a time domain resource overlapping with the time domain resources of the plurality of PUCCHs, is determined based on a channel priority.
In some embodiments, in a case where a channel priority of the plurality of PUCCHs is higher than a channel priority of the one or more PUSCHs, it is expected to receive the plurality of PUCCHs and not to receive the PUSCH among the one or more PUSCHs that has a time domain resource overlapping with the time domain resources of the plurality of PUCCHs; and in a case where the channel priority of the plurality of PUCCHs is lower than or equal to the channel priority of the one or more PUSCHs, it is expected that the UCI carried by the plurality of PUCCHs is multiplexed onto the one or more PUSCHs for transmission.

In some embodiments, the one or more PUSCHs include a plurality of PUSCHs, and the plurality of PUSCHs are transmitted based on different spatial information.

Multiplexing the UCI carried by the plurality of PUCCHs onto the one or more PUSCHs for transmission includes any one of:

multiplexing UCI carried by a first PUCCH among the plurality of PUCCHs onto a first PUSCH among the one or more PUSCHs for transmission;

multiplexing the UCI carried by the plurality of PUCCHs onto a target PUSCH among the one or more PUSCHs for transmission; or

in a case where an ACK/NACK feedback mode is joint feedback, multiplexing the UCI carried by the first PUCCH among the plurality of PUCCHs onto the first PUSCH among the one or more PUSCHs for transmission; and in a case where the ACK/NACK feedback mode is separate feedback, multiplexing the UCI carried by the plurality of PUCCHs onto the target PUSCH among the one or more PUSCHs for transmission;

where the first PUCCH is any one of the plurality of PUCCHs, and the first PUCCH and the first PUSCH are transmitted based on same spatial information.

In some embodiments, the target PUSCH includes any one of:

the target PUSCH being a PUSCH associated with a first TCI state among the plurality of PUSCHs;

the target PUSCH being a PUSCH with a first value of reference signal resource set index values associated with the plurality of PUSCHs;

the target PUSCH being a PUSCH with a first identifier of antenna panel identifiers associated with the plurality of PUSCHs;

the target PUSCH being a PUSCH with a second value of TRP index values associated with the plurality of PUSCHs;

the target PUSCH being a PUSCH with a third value of control resource set (CORESET) group index values associated with the plurality of PUSCHs;

the target PUSCH being a PUSCH transmitted in a first order among the plurality of PUSCHs;

the target PUSCH being a PUSCH scheduled in a second order among the plurality of PUSCHs;

the target PUSCH being a PUSCH with a first level of modulation and coding scheme (MCS) levels among the plurality of PUSCHs; or

the target PUSCH being each PUSCH among the plurality of PUSCHs.

In some embodiments, the plurality of PUSCHs include a PUSCH scheduled by one or more downlink control information (DCI) and/or a configured authorized PUSCH.

In some embodiments, the one or more PUSCHs include a PUSCH, the PUSCH includes a plurality of transmission layer sets, and the plurality of transmission layer sets are transmitted based on different spatial information.

Multiplexing the UCI carried by the plurality of PUCCHs onto the one or more PUSCHs for transmission includes any one of:

multiplexing UCI carried by a first PUCCH among the plurality of PUCCHs onto a first transmission layer set of the PUSCH for transmission;

multiplexing the UCI carried by the plurality of PUCCHs onto a target transmission layer set among the plurality of transmission layer sets of the PUSCH for transmission; or

in a case where an ACK/NACK feedback mode is joint feedback, multiplexing the UCI carried by the first PUCCH among the plurality of PUCCHs onto the first transmission layer set of the PUSCH for transmission; and in a case where the ACK/NACK feedback mode is separate feedback, multiplexing the UCI carried by the plurality of PUCCHs onto the target transmission layer set among the plurality of transmission layer sets of the PUSCH for transmission;

where the first transmission layer set is any one of the plurality of transmission layer sets, and a first transmission layer and the first PUCCH are transmitted based on same spatial information.

In some embodiments, the target transmission layer set includes any one of:

the target transmission layer set being a transmission layer set associated with a first TCI state among the plurality of transmission layer sets;

the target transmission layer set being a transmission layer set with a first value of reference signal resource set index values associated with the plurality of transmission layer sets;

the target transmission layer set being a transmission layer set with a first identifier of antenna panel identifiers associated with the plurality of transmission layer sets;

the target transmission layer set being a transmission layer set with a second value of TRP index values associated with the plurality of transmission layer sets;

the target transmission layer set being a transmission layer set with a third value of control resource set (CORESET) group index values associated with the plurality of transmission layer sets;

the target transmission layer set being a transmission layer set with a first level of modulation and coding scheme (MCS) levels among the plurality of transmission layer sets; or

the target transmission layer set being each transmission layer set among the plurality of transmission layer sets.

In some embodiments, a transmission manner of the plurality of transmission layer sets of the PUSCH is time division multiplexing (SDM) transmission.

In some embodiments, the spatial information includes one or more of:

a TCI state;

a control resource set group index value;

a sounding reference signal resource set index value;

other reference signal resource set index values;

a sounding reference signal index value;

other reference signal index values;

an antenna panel identifier; or

a TRP index value.

In some embodiments, other reference signals include one or more of:

a sounding reference signal (SRS), a channel state information reference signal (CSI-RS), a demodulation reference signal (DMRS), or a synchronization reference signal block (SSB).

In some embodiments, the plurality of PUCCHs are triggered by one or more DCI, and/or the plurality of PUCCHs are configured by a higher layer signaling.

In some embodiments, a transmission manner of the plurality of PUCCHs includes single frequency network (SFN) transmission and/or time domain repetition transmission.

In some embodiments, the plurality of PUCCHs are received on a first carrier, and the one or more PUSCHs are received on a second carrier; and the first carrier is the same as or different from the second carrier.

In some embodiments, the receiving unit 1601 is further configured to receive first information, where the first information includes one or more of:

first indication information, where the first indication information is used for indicating that the terminal device supports PUCCH and/or PUSCH transmissions triggered by one or more DCI on the first carrier and/or a frequency band where the first carrier is located; or

second indication information, where the second indication information is used for indicating that the terminal device supports PUCCH and/or PUSCH transmissions triggered by one or more DCI on the second carrier and/or a frequency band where the second carrier is located.

In an embodiment of the present application, the receiving unit 1701 in the second information transmission apparatus is further configured to receive a first channel, where the first channel is transmitted based on transmission information, the transmission information includes one or more of spatial information associated with the first channel, precoding indication information, transmission layer number information, or SRS resource indication information; and the transmission information is indicated based on third indication information.

In some embodiments, the third indication information indicates the transmission information of the first channel in any one of a first manner, a second manner or a third manner;

where in the first manner, the third indication information is used for indicating an SRS resource set associated with the first channel, and the SRS resource set associated with the first channel has an associated sounding reference signal indication information (SRI) field and/or an associated precoding information and number of layers indication information (TPMI) field, where an SRI field and/or a TPMI field not associated with the SRS resource set are reserved information fields;

in the second manner, the third indication information is used for indicating the SRS resource set associated with the first channel, and the SRS resource set associated with the first channel has an associated SRI field and/or an associated TPMI field, where there is no SRI field and/or TPMI field that are not associated with the SRS resource set; and

in the third manner, the third indication information is used for indicating the SRS resource set associated with the first channel, the SRS resource set associated with the first channel is associated with an SRI field after a plurality of SRI fields are connected in series and/or a TPMI field after a plurality of TPMIs are connected in series.

In some embodiments, the third indication information is determined based on any one of:

fourth indication information, where the fourth indication information is used for indicating any one of the first manner, the second manner, or the third manner;

fifth indication information, where the fifth indication information is used for indicating one or more of: a maximum number of transmission layers of single-TRP transmission and/or multi-TRP transmission, a type of a codebook subset of the single-TRP transmission and/or the multi-TRP transmission, an uplink full power transmission mode of the single-TRP transmission and/or the multi-TRP transmission, or a number of SRS ports of the single-TRP transmission and/or the multi-TRP transmission; or

a first rule.

In some embodiments, the fourth indication information is carried via a higher layer signaling or a physical layer signaling.

In some embodiments, the fifth indication information includes one or more of:

a maximum number of transmission layers of a single-TRP transmission scheme;

a maximum number of transmission layers of a multi-TRP transmission scheme;

a type of a codebook subset of a PUSCH in the single-TRP transmission scheme;

a type of a codebook subset of a PUSCH in the multi-TRP transmission scheme;

an uplink full power transmission mode in the single-TRP transmission scheme;

an uplink full power transmission mode in the multi-TRP transmission scheme;

a number of SRS ports in the single-TRP transmission scheme; or

a number of SRS ports corresponding to each antenna panel in the multi-TRP transmission scheme.

In some embodiments, determining the third indication information based on the first rule includes:

in a case where a terminal device receives the fourth indication information, determining the third indication information based on a manner indicated by the fourth indication information; and

in a case where the terminal device does not receive the fourth indication information, determining the third indication information based on the first manner.

Those skilled in the art should understand that the relevant description of the above-mentioned information transmission apparatuses in the embodiments of the present application may be understood by referring to the relevant description of the information transmission methods in the embodiments of the present application.

FIG. 18 is a schematic structural diagram of a communication device 1800 provided by the embodiments of the present application. The communication device may be a terminal device or a network device. The communication device 1800 shown in FIG. 18 includes a processor 1810. The processor 1810 may call a computer program from a memory and run the computer program, to implement the methods in the embodiments of the present application.

Optionally, as shown in FIG. 18, the communication device 1800 may further include a memory 1820. The processor 1810 may call the computer program from the memory 1820 and run the computer program, to implement the methods in the embodiment of the present application.

The memory 1820 may be a separate device independent from the processor 1810, or may be integrated into the processor 1810.

Optionally, as shown in FIG. 18, the communication device 1800 may further include a transceiver 1830, and the processor 1810 may control the transceiver 1830 to communicate with other devices, and specifically, to transmit information or data to other devices, or receive information or data transmitted by other devices.

The transceiver 1830 may include a transmitter and a receiver. The transceiver 1830 may further include antenna(s), and there may be one or more antennas.

Optionally, the communication device 1800 may specifically be a network device in the embodiments of the present application, and the communication device 1800 may implement the corresponding processes implemented by the network device in each method in the embodiments of the present application, which will not be repeated here for the sake of brevity.

Optionally, the communication device 1800 may specifically be a mobile terminal/terminal device in the embodiments of the present application, and the communication device 1800 may implement the corresponding processes implemented by the mobile terminal/terminal device in each method in the embodiments of the present application, which will not be repeated here for the sake of brevity.

FIG. 19 is a schematic structural diagram of a chip according to the embodiments of the present application. The chip 1900 shown in FIG. 19 includes a processor 1910. The processor 1910 may call a computer program from a memory and run the computer program, to implement the methods in the embodiment of the present application.

Optionally, as shown in FIG. 19, the chip 1900 may further include a memory 1920. The processor 1910 may call the computer program from the memory 1920 and run the computer program, to implement the methods in the embodiments of the present application.

The memory 1920 may be a separate device independent from the processor 1910, or may be integrated into the processor 1910.

Optionally, the chip 1900 may further include an input interface 1930. The processor 1910 may control the input interface 1930 to communicate with other devices or chips, and specifically, obtain information or data transmitted by other devices or chips.

Optionally, the chip 1900 may further include an output interface 1940. The processor 1910 may control the output interface 1940 to communicate with other devices or chips, and specifically, output information or data to other devices or chips.

Optionally, the chip may be applied to the network device in the embodiments of the present application, and the chip may implement the corresponding processes implemented by the network device in each method in the embodiments of the present application, which will not be repeated here for the sake of brevity.

Optionally, the chip may be applied to the mobile terminal/terminal device in the embodiments of the present application, and the chip may implement the corresponding processes implemented by the mobile terminal/terminal device in the each method in the embodiments of the present application, which will not be repeated here for the sake of brevity.

It should be understood that the chip mentioned in the embodiments of the present application may also be called a system-level chip, a system chip, a chip system or a system-on-chip chip.

The embodiments of the present application further provide a computer storage medium. The computer storage medium stores one or more programs, and the one or more programs may be executed by one or more processors to implement the methods in the embodiments of the present application.

FIG. 20 is a schematic block diagram of a communication system 2000 provided by the embodiments of the present application. As shown in FIG. 20, the communication system 2000 includes a terminal device 2010 and a network device 2020.

The terminal device 2010 may be used to implement corresponding functions implemented by the terminal device in the above methods, and the network device 2020 may be used to implement the corresponding functions implemented by the network device in the above methods, which will not be repeated here for the sake of brevity.

It should be understood that the processor in the embodiments of the present application may be an integrated circuit chip with a capability of processing signals. In the implementation process, various steps of the above method embodiments may be completed by an integrated logic circuit of hardware in the processor or instructions in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component, or the like, which can implement or perform various methods, steps and logical block diagrams disclosed in the embodiments of the present application. The general-purpose processor may be a microprocessor, or any conventional processor, or the like. The steps of the methods disclosed in combination with the embodiments of the present application may be directly embodied as being performed and completed by a hardware decoding processor, or by using a combination of hardware and software modules in the decoding processor. The software module may be located in a mature storage medium in the art such as a random memory, a flash memory, a read-only memory, a programmable read-only memory or an electrically erasable programmable memory, or a register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of illustration but not limitation, a lot of forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (synch link DRAM, SLDRAM), and a direct rambus RAM (DR RAM). It should be noted that the memory in the system and the method described herein is intended to include, but not limited to, these and any other suitable type of memories.

It should be understood that the above memory is exemplary but not limiting illustration, for example, the memory in the embodiments of the present application may also be an SRAM, a DRAM, an SDRAM, a DDR SDRAM, an ESDRAM, an SLDRAM, a DR RAM, or the like. That is, the memory in the embodiments of the present application is intended to include, but not limited to, these and any other suitable type of memories.

The embodiments of the present application further provide a computer-readable storage medium for storing a computer program.

Optionally, the computer-readable storage medium may be applied to the network device in the embodiments of the present application, and the computer program enables a computer to perform the corresponding process implemented by the network device in each method in the embodiments of the present application, which will not be repeated here for the sake of brevity.

Optionally, the computer-readable storage medium may be applied to the mobile terminal/terminal device in the embodiments of the present application, and the computer program enables a computer to perform the corresponding process implemented by the mobile terminal/terminal device in each method in the embodiments of the present application, which will not be repeated here for the sake of brevity.

The embodiments of the present application further provide a computer program product including computer program instructions.

Optionally, the computer program product may be applied to the network device in the embodiments of the present application, and the computer program instructions enable a computer to perform corresponding process implemented by the network device in each method in the embodiments of the present application, which will not be repeated here for brevity.

Optionally, the computer program product may be applied to the mobile terminal/terminal device in the embodiments of the present application, and the computer program instructions enable a computer to perform corresponding process implemented by the mobile terminal/terminal device in each method in the embodiments of the present application, which will not be repeated here for brevity.

The embodiments of the present application further provide a computer program.

Optionally, the computer program may be applied to the network device in the embodiments of the present application. The computer program, when run on a computer, enables the computer to perform the corresponding process implemented by the network device in each method in the embodiments of the present application, which will not be repeated here for brevity.

Optionally, the computer program may be applied to the mobile terminal/terminal device in the embodiments of the present application. The computer program, when run on a computer, enables the computer to perform the corresponding process implemented by the mobile terminal/terminal device in each method in the embodiments of the present application, which will not be repeated here for brevity.

Those ordinary skilled in the art may realize that units and algorithm steps of various examples described in combination with the embodiments disclosed herein are capable of being implemented in electronic hardware or in a combination of computer software and electronic hardware. Whether these functions are performed by way of hardware or software depends on a specific application and a design constraint of the technical solution. A skilled person may use a respective method for each specific application to implement the described functions, but such implementation should not be considered beyond the scope of the present application.

It may be clearly understood by those skilled in the art that for convenience and brevity of the description, specific working processes of the systems, devices and units described above may refer to corresponding processes in the above method embodiments, which will not be repeated here.

In the several embodiments provided by the present application, it should be understood that the systems, devices and method disclosed may be implemented in other ways. For example, the apparatus embodiments described above are only schematic. For example, the division of the units is only a division of logical functions, and there may be other division methods in an actual implementation. For example, a plurality of units or components may be combined or integrated into another system, or some features may be ignored or not performed. In addition, coupling or direct coupling or communicative connection as shown or discussed may be indirect coupling or communicative connection of devices or units through some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected depending on actual needs to implement the purpose of the schemes of the present embodiments.

In addition, various functional units in the various embodiments of the present application may be integrated into one processing unit, or the various units may exist physically separately, or two or more units may be integrated into one unit.

If being implemented in the form of a software functional unit and sold or used as an independent product, the described functions may be stored in a computer-readable storage medium. Based on such understanding, for the technical solution of the present application, an essential of the technical solution, or a part of the technical solution that contributes to the prior art, or a part of the technical solution may be embodied in the form of a software product. The computer software product is stored in a storage medium, and includes several instructions for enabling a computer device (which may be a personal computer, a server, or a network device) to perform all or some of the steps of the methods described in the various embodiments of the present application. Moreover, the storage mediums mentioned above include various mediums capable of storing program codes, such as a USB flash drive (U disk), a mobile hard disk, a read-only memory (ROM), a random access memory (RAM), a diskette, or an optical disk.

The above content is only specific implementations of the present application, but the protection scope of the present application is not limited thereto. Changes or replacements that any person skilled in the art could readily conceive of within the technical scope of the present application shall be included in the protection scope of the present application. Therefore, the protection scope of the present application should be subject to the protection scope of the claims.

**Claims**

1. An information transmission method, comprising:

   determining, by a terminal device, that time domain resources of a plurality of physical uplink control channels (PUCCHs) partially or completely overlap with time domain resources of one or more physical uplink shared channels (PUSCHs); and multiplexing, by the terminal device, uplink control information (UCI) carried by the plurality of PUCCHs onto the one or more PUSCHs for transmission, or transmitting, by the terminal device, the plurality of PUCCHs and determining, by the terminal device, not to transmit a PUSCH among the one or more PUSCHs that has a time domain resource overlapping with the time domain resources of the plurality of PUCCHs; wherein the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

2. The method according to claim 1, wherein multiplexing, by the terminal device, the uplink control information (UCI) carried by the plurality of PUCCHs onto the one or more PUSCHs for transmission, or transmitting, by the terminal device, the plurality of PUCCHs, and determining, by the terminal device, not to transmit the PUSCH among the one or more PUSCHs that has a time domain resource overlapping with the time domain resources of the plurality of PUCCHs comprises:

   determining, by the terminal device, to multiplex the UCI carried by the plurality of PUCCHs onto the one or more PUSCHs for transmission based on protocol specifications, or determining, by the terminal device, to transmit the plurality of PUCCHs and not to transmit the PUSCH among the one or more PUSCHs that has a time domain resource overlapping with the time domain resources of the plurality of PUCCHs;
   or
   determining, by the terminal device, to multiplex the UCI carried by the plurality of PUCCHs onto the one or more PUSCHs for transmission based on a channel priority, or determining, by the terminal device, to transmit the plurality of PUCCHs and not to transmit the PUSCH among the one or more PUSCHs that has a time domain resource overlapping with the time domain resources of the plurality of PUCCHs.

3. The method according to claim 2, wherein determining, by the terminal device, to multiplex the UCI carried by the plurality of PUCCHs onto the one or more PUSCHs for transmission based on the channel priority, or determining, by the terminal device, to transmit the plurality of PUCCHs and not to transmit the PUSCH among the one or more PUSCHs that has a time domain resource overlapping with the time domain resources of the plurality of PUCCHs comprises:
   in a case where a channel priority of the plurality of PUCCHs is higher than a channel priority of the one or more PUSCHs, transmitting, by the terminal device, the plurality of PUCCHs, and not transmitting, by the terminal device, the PUSCH among the one or more PUSCHs that has a time domain resource overlapping with the time domain resources of the plurality of PUCCHs; and in a case where the channel priority of the plurality of PUCCHs is lower than or equal to the channel priority of the one or more PUSCHs, multiplexing, by the terminal device, the UCI carried by the plurality of PUCCHs onto the one or more PUSCHs for transmission.

4. The method according to any one of claims 1 to 3, wherein the one or more PUSCHs comprise a plurality of PUSCHs, and the plurality of PUSCHs are transmitted based on different spatial information; and
   multiplexing, by the terminal device, the UCI carried by the plurality of PUCCHs onto the one or more PUSCHs for transmission comprises any one of:

> multiplexing, by the terminal device, UCI carried by a first PUCCH among the plurality of PUCCHs onto a first PUSCH among the one or more PUSCHs for transmission;
>
> multiplexing, by the terminal device, the UCI carried by the plurality of PUCCHs onto a target PUSCH among the one or more PUSCHs for transmission; or
>
> in a case where an acknowledgement/negative acknowledgement (ACK/NACK) feedback mode is joint feedback, multiplexing, by the terminal device, the UCI carried by the first PUCCH among the plurality of PUCCHs onto the first PUSCH among the one or more PUSCHs for transmission; and in a case where the ACK/NACK feedback mode is separate feedback, multiplexing, by the terminal device, the UCI carried by the plurality of PUCCHs onto the target PUSCH among the one or more PUSCHs for transmission;
>
> wherein the first PUCCH is any one of the plurality of PUCCHs, and the first PUCCH and the first PUSCH are transmitted based on same spatial information.

5.  The method according to claim 4, wherein the target PUSCH comprises any one of:

> the target PUSCH being a PUSCH associated with a first transmission configuration indicator (TCI) state among the plurality of PUSCHs;
>
> the target PUSCH being a PUSCH with a first value of sounding reference signal resource set index values associated with the plurality of PUSCHs;
>
> the target PUSCH being a PUSCH with a second value of other reference signal resource set index values associated with the plurality of PUSCHs;
>
> the target PUSCH being a PUSCH with a first identifier of antenna panel identifiers associated with the plurality of PUSCHs;
>
> the target PUSCH being a PUSCH with a third value of transmission/reception point (TRP) index values associated with the plurality of PUSCHs;
>
> the target PUSCH being a PUSCH with a fourth value of control resource set (CORESET) group index values associated with the plurality of PUSCHs;
>
> the target PUSCH being a PUSCH transmitted in a first order among the plurality of PUSCHs;
>
> the target PUSCH being a PUSCH scheduled in a second order among the plurality of PUSCHs;
>
> the target PUSCH being a PUSCH with a first level of modulation and coding scheme (MCS) levels among the plurality of PUSCHs; or
>
> the target PUSCH being each PUSCH among the plurality of PUSCHs.

6.  The method according to claim 4 or 5, wherein
    the plurality of PUSCHs comprise a PUSCH scheduled by one or more downlink control information (DCI) and/or a configured authorized PUSCH.

7.  The method according to any one of claims 1 to 3, wherein the one or more PUSCHs comprise a PUSCH, the PUSCH comprises a plurality of transmission layer sets, and the plurality of transmission layer sets are transmitted based on different spatial information; and
    multiplexing, by the terminal device, the UCI carried by the plurality of PUCCHs onto the one or more PUSCHs for transmission comprises any one of:

> multiplexing, by the terminal device, UCI carried by a first PUCCH among the plurality of PUCCHs onto a first transmission layer set of the PUSCH for transmission;
>
> multiplexing, by the terminal device, the UCI carried by the plurality of PUCCHs onto a target transmission layer set among the plurality of transmission layer sets of the PUSCH for transmission; or
>
> in a case where an ACK/NACK feedback mode is joint feedback, multiplexing, by the terminal device, the UCI carried by the first PUCCH among the plurality of PUCCHs onto the first transmission layer set of the PUSCH for transmission; and in a case where the ACK/NACK feedback mode is separate feedback, multiplexing, by the terminal device, the UCI carried by the plurality of PUCCHs onto the target transmission layer set among the plurality of transmission layer sets of the PUSCH for transmission;
>
> wherein the first transmission layer set is any one of the plurality of transmission layer sets, and the first transmission layer and the first PUCCH are transmitted based on same spatial information.

8.  The method according to claim 7, wherein the target transmission layer set comprises any one of:

the target transmission layer set being a transmission layer set associated with a first TCI state among the plurality of transmission layer sets;

the target transmission layer set being a transmission layer set with a first value of sounding reference signal resource set index values associated with the plurality of transmission layer sets;

the target transmission layer set being a transmission layer set with a second value of other reference signal resource set index values associated with the plurality of transmission layer sets;

the target transmission layer set being a transmission layer set with a first identifier of antenna panel identifiers associated with the plurality of transmission layer sets;

the target transmission layer set being a transmission layer set with a third value of TRP index values associated with the plurality of transmission layer sets;

the target transmission layer set being a transmission layer set with a fourth value of control resource set (CORESET) group index values associated with the plurality of transmission layer sets;

the target transmission layer set being a transmission layer set with a first level of modulation and coding scheme (MCS) levels among the plurality of transmission layer sets; or

the target transmission layer set being each transmission layer set among the plurality of transmission layer sets.

9. The method according to claim 7 or 8, wherein a transmission manner of the plurality of transmission layer sets of the PUSCH is time division multiplexing (SDM) transmission.

10. The method according to any one of claims 1 to 9, wherein the spatial information comprises one or more of:

a TCI state;
a control resource set group index value;
a sounding reference signal resource set index value;
other reference signal resource set index values;
a sounding reference signal index value;
other reference signal index values;
an antenna panel identifier; or
a TRP index value.

11. The method according to claim 4, 7 or 9, wherein the other reference signals comprise one or more of:
a channel state information reference signal (CSI-RS), a demodulation reference signal (DMRS), or a synchronization reference signal block (SSB).

12. The method according to any one of claims 1 to 11, wherein
the plurality of PUCCHs comprise a PUCCH triggered by one or more DCI and/or a PUCCH configured by a higher layer signaling.

13. The method according to any one of claims 1 to 12, wherein a transmission manner of the plurality of PUCCHs comprises single frequency network (SFN) transmission and/or time domain repetition transmission.

14. The method according to any one of claims 1 to 13, wherein the plurality of PUCCHs are transmitted on a first carrier, and the one or more PUSCHs are transmitted on a second carrier; and the first carrier is the same as or different from the second carrier.

15. The method according to claim 14, wherein the method comprises:
transmitting, by the terminal device, first information, wherein the first information comprises one or more of:

first indication information, wherein the first indication information is used for indicating that the terminal device supports PUCCH and/or PUSCH transmissions triggered by one or more DCI on the first carrier and/or a frequency band where the first carrier is located; or
second indication information, wherein the second indication information is used for indicating that the terminal device supports PUCCH and/or PUSCH transmissions triggered by one or more DCI on the second carrier and/or a frequency band where the second carrier is located.

16. An information transmission method, comprising:

determining, by a terminal device, third indication information, wherein the third indication information is used for indicating transmission information of a first channel; the transmission information comprises one or more of spatial information associated with the first channel, precoding indication information, transmission layer number information, or sounding reference signal (SRS) resource indication information; and

transmitting, by the terminal device, the first channel based on the transmission information.

17. The method according to claim 16, wherein the third indication information indicates the transmission information of the first channel in any one of a first manner, a second manner or a third manner;

wherein in the first manner, the third indication information is used for indicating an SRS resource set associated with the first channel, and the SRS resource set associated with the first channel has an associated sounding reference signal indication information (SRI) field and/or an associated precoding information and number of layers indication information (TPMI) field, wherein an SRI field and/or a TPMI field not associated with the SRS resource set are reserved information fields;

in the second manner, the third indication information is used for indicating the SRS resource set associated with the first channel, and the SRS resource set associated with the first channel has an associated SRI field and/or an associated TPMI field, wherein there is no SRI field and/or TPMI field that are not associated with the SRS resource set; and

in the third manner, the third indication information is used for indicating the SRS resource set associated with the first channel, the SRS resource set associated with the first channel is associated with an SRI field after a plurality of SRI fields are connected in series and/or a TPMI field after a plurality of TPMIs are connected in series.

18. The method according to claim 17, wherein the method further comprises:
determining, by the terminal device, the third indication information based on any one of:

fourth indication information, wherein the fourth indication information is used for indicating any one of the first manner, the second manner, or the third manner;

fifth indication information, wherein the fifth indication information is used for indicating one or more of: a maximum number of transmission layers of single-TRP transmission and/or multi-TRP transmission, a type of a codebook subset of the single-TRP transmission and/or the multi-TRP transmission, an uplink full power transmission mode of the single-TRP transmission and/or the multi-TRP transmission, or a number of SRS ports of the single-TRP transmission and/or the multi-TRP transmission; or

a first rule.

19. The method according to claim 18, wherein the fourth indication information is carried via a higher layer signaling or a physical layer signaling.

20. The method according to claim 18 or 19, wherein the fifth indication information comprises one or more of:

a maximum number of transmission layers of a single-TRP transmission scheme;
a maximum number of transmission layers of a multi-TRP transmission scheme;
a type of a codebook subset of a PUSCH in the single-TRP transmission scheme;
a type of a codebook subset of a PUSCH in the multi-TRP transmission scheme;
an uplink full power transmission mode in the single-TRP transmission scheme;
an uplink full power transmission mode in the multi-TRP transmission scheme;
a number of SRS ports in the single-TRP transmission scheme; or
a number of SRS ports corresponding to each antenna panel in the multi-TRP transmission scheme.

21. The method according to any one of claims 18 to 20, wherein determining, by the terminal device, the third indication information based on the first rule comprises:

in a case where the fourth indication information is received, determining the third indication information based on a manner indicated by the fourth indication information; and

in a case where the fourth indication information is not received, determining the third indication information based on the first manner.

22. An information transmission method, comprising:

in a case where time domain resources of a plurality of physical uplink control channels (PUCCHs) of a terminal device partially or completely overlap with time domain resources of one or more physical uplink shared channels (PUSCHs), expecting, by a network device, uplink control information (UCI) carried by the plurality of PUCCHs to be multiplexed onto the one or more PUSCHs for transmission, or expecting, by the network device, to receive the plurality of PUCCHs and expecting, by the network device, not to receive a PUSCH among the one or more PUSCHs that has a time domain resource overlapping with the time domain resources of the plurality of PUCCHs; wherein the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

23. The method according to claim 22, wherein the network device expecting the uplink control information (UCI) carried by the plurality of PUCCHs to be multiplexed onto the one or more PUSCHs for transmission, or the network device receiving the plurality of PUCCHs and expecting not to receive the PUSCH among the one or more PUSCHs that has a time domain resource overlapping with the time domain resources of the plurality of PUCCHs, is determined based on protocol specifications;

or the network device expecting the uplink control information (UCI) carried by the plurality of PUCCHs to be multiplexed onto the one or more PUSCHs for transmission, or the network device receiving the plurality of PUCCHs and expecting not to receive the PUSCH among the one or more PUSCHs that has a time domain resource overlapping with the time domain resources of the plurality of PUCCHs, is determined based on a channel priority.

24. The method according to claim 23, wherein

in a case where a channel priority of the plurality of PUCCHs is higher than a channel priority of the one or more PUSCHs, the network device expects to receive the plurality of PUCCHs and expects not to receive the PUSCH among the one or more PUSCHs that has a time domain resource overlapping with the time domain resources of the plurality of PUCCHs; and in a case where the channel priority of the plurality of PUCCHs is lower than or equal to the channel priority of the one or more PUSCHs, the network device expects the UCI carried by the plurality of PUCCHs to be multiplexed onto the one or more PUSCHs for transmission.

25. The method according to any one of claims 22 to 24, wherein the one or more PUSCHs comprise a plurality of PUSCHs, and the plurality of PUSCHs are transmitted based on different spatial information;

multiplexing the UCI carried by the plurality of PUCCHs onto the one or more PUSCHs for transmission comprises any one of:

multiplexing UCI carried by a first PUCCH among the plurality of PUCCHs onto a first PUSCH among the one or more PUSCHs for transmission;

multiplexing the UCI carried by the plurality of PUCCHs onto a target PUSCH among the one or more PUSCHs for transmission; or

in a case where an ACK/NACK feedback mode is joint feedback, multiplexing the UCI carried by the first PUCCH among the plurality of PUCCHs onto the first PUSCH among the one or more PUSCHs for transmission; and in a case where the ACK/NACK feedback mode is separate feedback, multiplexing the UCI carried by the plurality of PUCCHs onto the target PUSCH among the one or more PUSCHs for transmission;

wherein the first PUCCH is any one of the plurality of PUCCHs, and the first PUCCH and the first PUSCH are transmitted based on same spatial information.

26. The method according to claim 25, wherein the target PUSCH comprises any one of:

the target PUSCH being a PUSCH associated with a first TCI state among the plurality of PUSCHs;

the target PUSCH being a PUSCH with a first value of reference signal resource set index values associated with the plurality of PUSCHs;

the target PUSCH being a PUSCH with a first identifier of antenna panel identifiers associated with the plurality of PUSCHs;

the target PUSCH being a PUSCH with a second value of TRP index values associated with the plurality of PUSCHs;

the target PUSCH being a PUSCH with a third value of control resource set (CORESET) index values associated with the plurality of PUSCHs;

the target PUSCH being a PUSCH transmitted in a first order among the plurality of PUSCHs;

the target PUSCH being a PUSCH scheduled in a second order among the plurality of PUSCHs;

the target PUSCH being a PUSCH with a first level of modulation and coding scheme (MCS) levels among the plurality of PUSCHs; or

the target PUSCH being each PUSCH among the plurality of PUSCHs.

27. The method according to claim 25 or 26, wherein
    the plurality of PUSCHs comprise a PUSCH scheduled by one or more downlink control information (DCI) and/or a configured authorized PUSCH.

28. The method according to any one of claims 22 to 24, wherein the one or more PUSCHs comprise a PUSCH, the PUSCH comprises a plurality of transmission layer sets, and the plurality of transmission layer sets are transmitted based on different spatial information; and
    multiplexing the UCI carried by the plurality of PUCCHs onto the one or more PUSCHs for transmission comprises any one of:

    multiplexing UCI carried by a first PUCCH among the plurality of PUCCHs onto a first transmission layer set of the PUSCH for transmission;
    multiplexing the UCI carried by the plurality of PUCCHs onto a target transmission layer set among the plurality of transmission layer sets of the PUSCH for transmission; or
    in a case where an ACK/NACK feedback mode is joint feedback, multiplexing the UCI carried by the first PUCCH among the plurality of PUCCHs onto the first transmission layer set of the PUSCH for transmission; and in a case where the ACK/NACK feedback mode is separate feedback, multiplexing the UCI carried by the plurality of PUCCHs onto the target transmission layer set among the plurality of transmission layer sets of the PUSCH for transmission;
    wherein the first transmission layer set is any one of the plurality of transmission layer sets, and the first transmission layer and the first PUCCH are transmitted based on same spatial information.

29. The method according to claim 28, wherein the target transmission layer set comprises any one of:

    the target transmission layer set being a transmission layer set associated with a first TCI state among the plurality of transmission layer sets;
    the target transmission layer set being a transmission layer set with a first value of reference signal resource set index values associated with the plurality of transmission layer sets;
    the target transmission layer set being a transmission layer set with a first identifier of antenna panel identifiers associated with the plurality of transmission layer sets;
    the target transmission layer set being a transmission layer set with a second value of TRP index values associated with the plurality of transmission layer sets;
    the target transmission layer set being a transmission layer set with a third value of control resource set (CORESET) group index values associated with the plurality of transmission layer sets;
    the target transmission layer set being a transmission layer set with a first level of modulation and coding scheme (MCS) levels among the plurality of transmission layer sets; or
    the target transmission layer set being each transmission layer set among the plurality of transmission layer sets.

30. The method according to claim 28 or 29, wherein a transmission manner of the plurality of transmission layer sets of the PUSCH is time division multiplexing (SDM) transmission.

31. The method according to any one of claims 22 to 30, wherein the spatial information comprises one or more of:

    a TCI state;
    a control resource set group index value;
    a sounding reference signal resource set index value;
    other reference signal resource set index values;
    a sounding reference signal index value;
    other reference signal index values;
    an antenna panel identifier; or
    a TRP index value.

32. The method according to claim 26, 29 or 31, wherein other reference signals comprise one or more of:
    a sounding reference signal (SRS), a channel state information reference signal (CSI-RS), a demodulation reference signal (DMRS), or a synchronization reference signal block (SSB).

33. The method according to any one of claims 22 to 32, wherein
the plurality of PUCCHs are triggered by one or more DCI, and/or the plurality of PUCCHs are configured by a higher layer signaling.

34. The method according to any one of claims 22 to 33, wherein a transmission manner of the plurality of PUCCHs comprises single frequency network (SFN) transmission and/or time domain repetition transmission.

35. The method according to any one of claims 22 to 34, wherein the plurality of PUCCHs are received on a first carrier, and the one or more PUSCHs are received on a second carrier; and the first carrier is the same as or different from the second carrier.

36. The method according to claim 35, wherein the method comprises:
receiving, by the network device, first information, wherein the first information comprises one or more of:

first indication information, wherein the first indication information is used for indicating that the terminal device supports PUCCH and/or PUSCH transmissions triggered by one or more DCI on the first carrier and/or a frequency band where the first carrier is located; or
second indication information, wherein the second indication information is used for indicating that the terminal device supports PUCCH and/or PUSCH transmissions triggered by one or more DCI on the second carrier and/or a frequency band where the second carrier is located.

37. An information transmission method, comprising:
receiving, by a network device, a first channel, wherein the first channel is transmitted based on transmission information, the transmission information comprises one or more of spatial information associated with the first channel, precoding indication information, transmission layer number information, or SRS resource indication information; and the transmission information is indicated based on third indication information.

38. The method according to claim 37, wherein the third indication information indicates the transmission information of the first channel in any one of a first manner, a second manner or a third manner;

wherein in the first manner, the third indication information is used for indicating an SRS resource set associated with the first channel, and the SRS resource set associated with the first channel has an associated sounding reference signal indication information (SRI) field and/or an associated precoding information and number of layers indication information (TPMI) field, wherein an SRI field and/or a TPMI field not associated with the SRS resource set are reserved information fields;
in the second manner, the third indication information is used for indicating the SRS resource set associated with the first channel, and the SRS resource set associated with the first channel has an associated SRI field and/or an associated TPMI field, wherein there is no SRI field and/or TPMI field that are not associated with the SRS resource set; and
in the third manner, the third indication information is used for indicating the SRS resource set associated with the first channel, the SRS resource set associated with the first channel is associated with an SRI field after a plurality of SRI fields are connected in series and/or a TPMI field after a plurality of TPMIs are connected in series.

39. The method according to claim 38, wherein the third indication information is determined based on any one of:

fourth indication information, wherein the fourth indication information is used for indicating any one of the first manner, the second manner, or the third manner;
fifth indication information, wherein the fifth indication information is used for indicating one or more of: a maximum number of transmission layers of single-TRP transmission and/or multi-TRP transmission, a type of a codebook subset of the single-TRP transmission and/or the multi-TRP transmission, an uplink full power transmission mode of the single-TRP transmission and/or the multi-TRP transmission, or a number of SRS ports of the single-TRP transmission and/or the multi-TRP transmission; or
a first rule.

40. The method according to claim 39, wherein the fourth indication information is carried via a higher layer signaling or a physical layer signaling.

41. The method according to claim 39 or 40, wherein the fifth indication information comprises one or more of:

a maximum number of transmission layers of a single-TRP transmission scheme;
a maximum number of transmission layers of a multi-TRP transmission scheme;
a type of a codebook subset of a PUSCH in the single-TRP transmission scheme;
a type of a codebook subset of a PUSCH in the multi-TRP transmission scheme;
an uplink full power transmission mode in the single-TRP transmission scheme;
an uplink full power transmission mode in the multi-TRP transmission scheme;
a number of SRS ports in the single-TRP transmission scheme; or
a number of SRS ports corresponding to each antenna panel in the multi-TRP transmission scheme.

42. The method according to any one of claims 39 to 41, wherein determining the third indication information based on the first rule comprises:

in a case where a terminal device receives the fourth indication information, determining the third indication information based on a manner indicated by the fourth indication information; and
in a case where the terminal device does not receive the fourth indication information, determining the third indication information based on the first manner.

43. An information transmission apparatus applied to a terminal device, the information transmission apparatus comprising:

a transmitting unit, configured to determine that time domain resources of a plurality of physical uplink control channels (PUCCHs) partially or completely overlap with time domain resources of one or more physical uplink shared channels (PUSCHs), multiplex uplink control information (UCI) carried by the plurality of PUCCHs onto the one or more PUSCHs for transmission, or transmit the plurality of PUCCHs and determine not to transmit a PUSCH among the one or more PUSCHs that has a time domain resource overlapping with the time domain resources of the plurality of PUCCHs;
wherein the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

44. An information transmission apparatus applied to a terminal device, the information transmission apparatus comprising:

a determining unit, configured to determine third indication information, wherein the third indication information is used for indicating transmission information of a first channel; and the transmission information comprises one or more of spatial information associated with the first channel, precoding indication information, transmission layer number information, or SRS resource indication information; and
a transmitting unit, configured to transmit the first channel based on the transmission information.

45. An information transmission apparatus applied to a network device, the information transmission apparatus comprising:

a receiving unit, configured to, in a case where time domain resources of a plurality of physical uplink control channels (PUCCHs) of a terminal device partially or completely overlap with time domain resources of one or more physical uplink shared channels (PUSCHs), expect uplink control information (UCI) carried by the plurality of PUCCHs to be multiplexed onto the one or more PUSCHs for transmission, or expect to receive the plurality of PUCCHs and expect not to receive a PUSCH among the one or more PUSCHs that has a time domain resource overlapping with the time domain resources of the plurality of PUCCHs;
wherein the plurality of PUCCHs are transmitted based on same or different spatial information; a plurality of PUSCHs among the one or more PUSCHs are transmitted based on different spatial information, or a plurality of transmission layer sets of any one PUSCH among the one or more PUSCHs are transmitted based on different spatial information.

46. An information transmission apparatus applied to a network device, the information transmission apparatus comprising:
a receiving unit, configured to receive a first channel, wherein the first channel is transmitted based on transmission information, the transmission information comprises one or more of spatial information associated with the first channel, precoding indication information, transmission layer number information, or SRS resource indication information; and the transmission information is indicated based on third indication information.

47. A terminal device, comprising a memory, a processor and a transceiver;

wherein the transceiver is configured to implement communication with a network device;
the memory stores a computer program that is executable on the processor; and
the processor, when executing the program in combination with the transceiver, implements the method according to any one of claims 1 to 15, or 16 to 21.

48. A network device, comprising: a memory, a processor and a transceiver;

wherein the transceiver is configured to implement communication with a terminal device;
the memory stores a computer program that is executable on the processor; and
the processor, when executing the program in combination with the transceiver, implements the method according to any one of claims 22 to 36, or 37 to 42.

49. A computer storage medium, wherein the computer storage medium stores one or more programs, and the one or more programs are executed by one or more processors to implement the method according to any one of claims 1 to 21 or claims 22 to 42.

50. A chip, comprising a processor, configured to call a computer program from a memory and run the computer program to enable a device equipped with the chip to perform the method according to any one of claims 1 to 21 or claims 22 to 42.

51. A computer program product, wherein the computer program product comprises a computer storage medium, the computer storage medium stores a computer program, and the computer program comprises instructions that are capable of being executed by at least one processor; when the instructions are executed by the at least one processor, the method according to any one of claims 1 to 21 or claims 22 to 42 is implemented.

52. A computer program, wherein the computer program enables a computer to perform the method according to any one of claims 1 to 21, or claims 22 to 42.

FIG. 1

FIG. 2A

FIG. 2B

FIG. 2C

FIG. 2D

FIG. 3

Determining, by a terminal device, that time domain resources of a plurality of PUCCHs partially or completely overlap with time domain resources of one or more PUSCHs; and multiplexing, by the terminal device, UCI carried by the plurality of PUCCHs onto the one or more PUSCHs for transmission, or transmitting, by the terminal device, the plurality of PUCCHs and determining, by the terminal device, not to transmit a PUSCH among the one or more PUSCHs that has a time domain resource overlapping with the time domain resources of the plurality of PUCCHs

S410

FIG. 4

FIG. 5

FIG. 6

Spatial information 1 | PUCCH1

Spatial information 2 | PUCCH2

Spatial information 1 | Transmission layer set 1

PUSCH

Spatial information 2 | Transmission layer set 2

Time domain

FIG. 7

PUCCH1

PUCCH2

Target transmission layer set | Transmission layer set 1

PUSCH

Transmission layer set 2

Time domain

FIG. 8

SFN PUCCH1

SFN PUCCH2

First carrier

Partially overlap

sDCI /mDCI PUSCH1

sDCI /mDCI PUSCH2

Second carrier

FIG. 9A

SFN
PUCCH1

SFN
PUCCH2

First
carrier

Completely
overlap

sDCI /mDCI
PUSCH1

Second
carrier

sDCI /mDCI
PUSCH2

## FIG. 9B

SFN
PUCCH1

SFN
PUCCH1

SFN
PUCCH1

SFN
PUCCH2

SFN
PUCCH2

SFN
PUCCH2

First
carrier

Partially
overlap

sDCI /mDCI
PUSCH1

Second
carrier

sDCI /mDCI
PUSCH2

## FIG. 10A

SFN
PUCCH1

SFN
PUCCH1

SFN
PUCCH1

SFN
PUCCH2

SFN
PUCCH2

SFN
PUCCH2

First
carrier

Completely
overlap

sDCI /mDCI
PUSCH1

Second
carrier

sDCI /mDCI
PUSCH2

## FIG. 10B

SFN
PUCCH1

SFN
PUCCH2

CC1

mDCI
PUSCH1

mDCI
PUSCH2

CC2

## FIG. 11

FIG. 12

FIG. 13

FIG. 14

Determining, by a terminal device, third indication information, where the third indication information is used for determining transmission information of a first channel; the transmission information of the first channel includes one or more of spatial information associated with the first channel, precoding indication information, transmission layer number information, or SRS resource indication information — S1510

Transmitting, by the terminal device, the first channel based on the transmission information — S1520

FIG. 15

Information transmission apparatus

1601

Transmitting unit

FIG. 16

Information transmission apparatus

1701

Receiving unit

FIG. 17

Communication device 1800

Memory
1820

Processor
1810

Transceiver
1830

FIG. 18

Chip 1900

Input interface
1930

Processor
1910

Memory
1920

Output interface
1940

FIG. 19

Communication system 2000

Terminal device

2010

Network device

2020

FIG. 20

## INTERNATIONAL SEARCH REPORT

| | |
|---|---|
| International application No. | |
| | **PCT/CN2023/094361** |

**A.      CLASSIFICATION OF SUBJECT MATTER**

H04W72/0446(2023.01)i

According to International Patent Classification (IPC) or to both national classification and IPC

**B.      FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT: CNKI; ENTXTC; DWPI; IEEE; 3GPP: PUCCH, PUSCH, UCI, TCI, SRS, TPMI, TRP, 时域, 资源, 重叠, 重合, 复用, 传输, 取消, 丢弃, 优先级, 指示, 空间信息, 预编码指示, 传输层, time domain, resource, overlap, coincidence, multiplexing, transmission, cancel+, drop+, priority, indicat+, spatial information, precoding indication, transmission layer

**C.      DOCUMENTS CONSIDERED TO BE RELEVANT**

| Category* | Citation of document, with indication, where appropriate, of the relevant passages | Relevant to claim No. |
|---|---|---|
| X | CN 114071743 A (VIVO COMMUNICATION TECHNOLOGY CO., LTD.) 18 February 2022 (2022-02-18) <br> description, paragraphs [0004]-[0057] | 1-15, 22-36, 43, 45, 47-52 |
| X | CN 110972286 A (TELECOMMUNICATIONS TECHNOLOGY RESEARCH INSTITUTE CO., LTD.) 07 April 2020 (2020-04-07) <br> description, paragraphs [0006]-[0117] | 1-15, 22-36, 43, 45, 47-52 |
| X | US 2022158775 A1 (APPLE INC.) 19 May 2022 (2022-05-19) <br> description, paragraphs [0176]-[0218] | 1-15, 22-36, 43, 45, 47-52 |
| X | QUALCOMM INC. "Summary of remaining issues for UCI piggyback on PUSCH" <br> *3GPP TSG RAN WG1 Meeting AH 1801, R1-1801092*, 26 January 2018 (2018-01-26), <br> pages 1-5 | 1-15, 22-36, 43, 45, 47-52 |
| X | CN 114765879 A (VIVO COMMUNICATION TECHNOLOGY CO., LTD.) 19 July 2022 (2022-07-19) <br> description, paragraphs [0004]-[0104] | 16-21, 37-42, 44, 46-52 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2023** | **14 December 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/094361** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2021204257 A1 (CHINA MOBILE COMMUNICATION CO., LTD., RESEARCH INSTITUTE et al.) 14 October 2021 (2021-10-14)<br>entire document | 1-52 |

Form PCT/ISA/210 (second sheet) (July 2022)

**INTERNATIONAL SEARCH REPORT**
Information on patent family members

International application No.

**PCT/CN2023/094361**

| Patent document cited in search report | | | Publication date (day/month/year) | Patent family member(s) | | | Publication date (day/month/year) |
|---|---|---|---|---|---|---|---|
| CN | 114071743 | A | 18 February 2022 | WO | 2022028604 | A1 | 10 February 2022 |
| CN | 110972286 | A | 07 April 2020 | None | | | |
| US | 2022158775 | A1 | 19 May 2022 | KR | 20210143304 | A | 26 November 2021 |
| | | | | WO | 2020198667 | A1 | 01 October 2020 |
| | | | | CN | 113892244 | A | 04 January 2022 |
| CN | 114765879 | A | 19 July 2022 | WO | 2022152271 | A1 | 21 July 2022 |
| WO | 2021204257 | A1 | 14 October 2021 | CN | 113541876 | A | 22 October 2021 |

Form PCT/ISA/210 (patent family annex) (July 2022)